(19) **Europäisches Patentamt**
**European Patent Office**
**Office européen des brevets**

(11) **EP 4 579 577 B1**

(12) **EUROPEAN PATENT SPECIFICATION**

(45) Date of publication and mention
of the grant of the patent:
**31.12.2025 Bulletin 2026/01**

(21) Application number: **24220885.8**

(22) Date of filing: **18.12.2024**

(51) International Patent Classification (IPC):
**G06T 5/50** *(2006.01)* **G06T 5/73** *(2024.01)*

(52) Cooperative Patent Classification (CPC):
**G06T 5/73; G06T 5/50;** G06T 2207/10024;
G06T 2207/10036; G06T 2207/10048;
G06T 2207/20081

(54) **METHOD AND SYSTEM FOR MULTIMODAL IMAGE SUPER-RESOLUTION USING CONVOLUTIONAL DICTIONARY LEARNING**

VERFAHREN UND SYSTEM ZUR MULTIMODALEN BILDSUPERAUFLÖSUNG UNTER VERWENDUNG VON FALTUNGSWÖRTERBUCHLERNEN

PROCÉDÉ ET SYSTÈME DE SUPER-RÉSOLUTION D'IMAGE MULTIMODALE À L'AIDE D'UN APPRENTISSAGE DE DICTIONNAIRE CONVOLUTIF

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **29.12.2023 IN 202321089711**

(43) Date of publication of application:
**02.07.2025 Bulletin 2025/27**

(73) Proprietor: **Tata Consultancy Services Limited Maharashtra (IN)**

(72) Inventors:
• **CHANDRA, MARISWAMY GIRISH**
**560066 Bangalore, Karnataka (IN)**
• **SAHU, SAURABH**
**560066 Bangalore, Karnataka (IN)**
• **MAJUMDAR, ANGSHUL**
**110020 New Delhi, Delhi (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
• **GAO FANGYUAN ET AL: "Multi-Modal Convolutional Dictionary Learning", vol. 31, 1 January 2022 (2022-01-01), USA, pages 1325 - 1339, XP093274484, ISSN: 1057-7149, Retrieved from the Internet <URL:https://ieeexplore.ieee. org/stampPDF/getPDF.jsp?tp=& arnumber=9681224& ref=aHR0cHM6Ly9pZWVleHBsb3JlLmlllZ WUub3JnL2RvY3VtZW50Lzk2ODEyMjQ=> DOI: 10.1109/TIP.2022.3141251**

**Description**

CROSS-REFERENCE TO RELATED APPLICATIONS AND PRIORITY

The present application claims priority to Indian application no. 202321089711, filed on December 29, 2023.

TECHNICAL FIELD

The disclosure herein generally relates to the field of image processing, and, more particularly, to a method and system for multimodal image super-resolution using convolutional dictionary learning.

BACKGROUND

Image super-resolution (ISR) refers to enhancing pixel-based image resolution by minimizing visual artifacts. Generating a high-resolution (HR) version of a low-resolution (LR) image is a complex task that involves inferring missing pixel values, which makes ISR a challenging and ill-posed problem. Different approaches have been proposed to regularize this ill-posed problem by incorporating prior knowledge, such as natural priors, local and non-local similarity, features based on dictionary learning and deep learning. But all these methods primarily focus on single-modality images without exploiting the information available from other imaging modalities that can be utilized as guidance for ISR. In many practical applications with multi-modal imaging systems in place, the same scene is captured by different imaging modalities. Remote sensing for earth observation is one such application where panchromatic, multi-spectral images are acquired at different resolutions to manage the cost, bandwidth, and complexity. This drives the need for Multi-modal Image Super-Resolution (MISR) techniques that can enhance the LR images of the target modality using the information from HR images of other modalities (referred as guidance modality) that share salient features like boundaries, textures, edges, etc. Depth map super-resolution with guidance from RGB, medical image super-resolution using multi-modal Magnetic Resonance (MR) and cross-modal Computed Tomography (CT) and MR image are some other applications where MISR is required.

Existing works in the field of MISR include compressive sensing, Guided image Filtering (GF), Joint Bilateral Filtering (JBF), Joint image Restoration (JR), Deep Joint image Filtering (DJF), Coupled Dictionary Learning (Coupled DL), Joint Coupled Transform Learning (JCTL) and Joint Coupled Deep Transform Learning (JCDTL), and the recent Multi-modal Convolutional Dictionary Learning technique (MCDL). All these techniques differ in the way they transfer the structural details of the guidance image to enhance the LR image of target modality. Their performance depends on how well they are able to identify and model the complex dependencies between the two imaging modalities. Sparse representation learning using Dictionary Learning (DL) has gained popularity for addressing inverse problems including MISR but it has certain constraints. One notable limitation is that the learned dictionaries are inherently not translation invariant, i.e., the basis elements often appear as shifted versions of one another. Additionally, as these dictionaries operate on individual patches rather than the entire image, they reconstruct and sparsify patches independently, due to which the underlying structure of the signal may get lost. Both these limitations impact quality of the reconstructed image. Convolutional Dictionary Learning (CDL), on the other hand, employs translation-invariant dictionaries, called convolutional dictionaries, which can effectively mitigate these limitations. These dictionaries are well-suited for representing signals that exhibit translation invariance, such as natural images and sounds, making them applicable to a range of image processing and computer vision tasks.

Some of the works in literature have attempted usage of CDL for MISR but they have certain drawbacks. One such work discloses an image super-resolution analysis method based on multi-modal convolution sparse coding network which comprises of learning 5 modules (1 multi-modal convolutional sparse encoder, 2 side information encoders and 2 convolutional decoders) to generate a HR image of target modality. This network has a large number of parameters that has to be trained and therefore requires huge amount of training data and longer training time.

SUMMARY

Embodiments of the present disclosure present technological improvements as solutions to one or more of the above-mentioned technical problems recognized by the inventors in conventional systems. In one embodiment, a method for multimodal image super-resolution using convolutional dictionary learning is provided. The invention is set out in the appended set of claims 1-5.

In another aspect, a system for multimodal image super-resolution using convolutional dictionary learning is provided. The invention is set out in the appended set of claims 6-10.

In yet another aspect, there are provided one or more non-transitory machine-readable information storage mediums comprising one or more instructions which when executed by one or more hardware processors cause a method for multimodal image super-resolution using convolutional dictionary learning. The invention is set out in the appended set of claims 11-15.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for multimodal image super-resolution using convolutional dictionary learning, according to some embodiments of the present disclosure.
FIG. 2 illustrates a flow diagram of a processor implemented method for multimodal image super-resolution using convolutional dictionary learning, according to some embodiments of the present disclosure.
FIG. 3 is a block diagram of an example implementation of method of FIG. 2, according to some embodiments of the present disclosure.
FIG. 4 illustrates convergence plot of an example implementation of method of FIG. 2, according to some embodiments of the present disclosure.
FIGS. 5A to 5D, collectively referred as FIG. 5, illustrate examples of trained plurality of dictionaries obtained from method of FIG. 2, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In multi-modal imaging systems, different modalities often capture the image from the same scene. While different sensors contain unique features, they still share some common features, for example, edges, texture, and shapes, that can be leveraged for super-resolution tasks. The objective of Multi-modal Image Super resolution (MISR) is to reconstruct a High Resolution (HR) image z of target modality from a Low Resolution (LR) image x of target modality with the guidance of HR image y from another modality, referred as guidance modality, by modelling the cross-modal dependencies between the different modalities. The existing techniques of MISR differ in the way they transfer the structural details of the guidance image to enhance the LR image of target modality. Their performance depends on how well they are able to identify and model the complex dependencies between the two imaging modalities. To handle the disparities between the guidance and target modality much better, learning-based methods like deep learning, and sparse representation learning employing dictionaries and transforms are more popular. In general, deep learning methods require more training data and massive compute resources for good reconstruction. Also, they lack interpretability and the trained models are not guaranteed to enforce measurement consistency between the inputs and the output during testing. In contrast, sparse representation learning-based methods do not suffer from these drawbacks and offer an improved performance compared to deep learning techniques, especially with limited training data.

However, sparse representation learning based techniques also have certain constraints. The learned dictionaries are inherently not translation invariant. Additionally, as these dictionaries operate on individual patches rather than the entire image, they reconstruct and sparsify patches independently, due to which the underlying structure of the signal may get lost. Both these limitations impact the quality of the reconstructed image. Thus, the present disclosure provides a method and system for multi-modal image super resolution using convolutional dictionaries which are translation invariant. The convolutional dictionaries consists of a set of $M$ filters and associated sparse coefficients that are learned to capture features (such as edges, corners, color gradients, boundaries etc.) of input images from different modalities. As understood by a person skilled in the art, in convolutional dictionary learning, a signal (i.e. image, in the context of present disclosure) $\{x_i\}_{i=1}^{N}$ with $N$ measurements each of $n$ dimension is reconstructed using a set of $M$ linear filters $\{d_m\}_{m=1}^{M}$ and associated set of coefficients $\{a_{m,i}\}_{m=1}^{M}$ by optimizing equation 1.

$$\min_{\{d_m\},\{a_{m,i}\}} \frac{1}{2}\sum_{i=1}^{N}\left\|x_i - \sum_{m=1}^{M} d_m * a_{m,i}\right\|_2^2 + \lambda \sum_{i,m}\left\|a_{m,i}\right\|_1, \text{ subject to } \|d_m\|_2^2 = 1 \ \forall \ m$$

$$\ldots \ldots (1)$$

In equation 1, * denotes convolution operation, $l_1$ norm on $a_{m,i}$ is used to enforce sparsity and $l_2$ norm constraint on $d_m$ is employed to compensate for scaling ambiguity between dictionary atoms and the coefficients. Defining $D_m$ as a linear

operator such that $D_m a_{m,i} = d_m * a_{m,i}$ and taking $D = (D_1, ..., D_m)$, $X = (x_1, ..., x_N)$ and $A = \begin{pmatrix} a_{1,1} & \cdots & a_{1,N} \\ \vdots & \vdots & \vdots \\ a_{M,1} & \cdots & a_{M,N} \end{pmatrix}$, equation

1 is rewritten as equation 2.

$$\min_{D,A} \frac{1}{2}\|X - DA\|_F^2 + \lambda\|A\|_1 \ \ldots \ldots (2)$$

The optimization problem in equation 2 is not jointly convex in both the dictionary filters and the coefficients. Hence, Alternating Minimization (AM) technique is employed to estimate them. While the convolutional sparse coefficients can be solved by Alternating Direction Method of Multipliers (ADMM) in the DFT domain, the convolutional dictionaries can be solved using the Convolutional Constrained Method of Optimal Directions (CCMOD).

Embodiments of present disclosure provide a method and system for multi-modal image super resolution using convolutional dictionaries. Initially a plurality of training images are obtained. The plurality of training images comprise a set of low-resolution (LR) images 'X' of a target modality, a set of high-resolution (HR) images 'Y' of a guidance modality, and a set of high-resolution (HR) images 'Z' of the target modality. Then, a plurality of dictionaries and associated plurality of sparse coefficients are initialized. The plurality of dictionaries comprise i) a first convolutional dictionary 'S' associated with a first set of sparse coefficients 'A' among the plurality of sparse coefficients. The first convolutional dictionary comprises $M$ filters to extract features from the set of low-resolution images of the target modality; ii) a second convolutional dictionary 'G' associated with a second set of sparse coefficients 'B' among the plurality of sparse coefficients. The second convolutional dictionary comprises $M$ filters to extract features from the set of high-resolution images of the guidance modality; iii) a first coupling convolutional dictionary 'W'; and iv) a second coupling convolutional dictionary 'V'. The first and second coupling convolutional dictionaries model the relationship between the target and guidance modalities. Initializing the dictionaries and coefficients provides a starting point for the training process. The initialized plurality of dictionaries and associated plurality of sparse coefficients are jointly trained (updated) iteratively using the plurality of training images until convergence of an objective function is achieved. At each iteration, the sparse coefficients are trained by keeping dictionaries fixed and then the dictionaries are trained by keeping sparse coefficients fixed. The trained plurality of dictionaries and the associated plurality of sparse coefficients obtained upon achieving the convergence of the objective function are used for performing multimodal image super resolution.

When a new low-resolution image of the target modality and a high resolution image of guidance modality are obtained, the plurality of sparse coefficients are computed based on the trained plurality of dictionaries and the obtained images. A first set of coefficients A is computed based on the trained first convolutional dictionary S and the low-resolution image of the target modality by using a standard convolutional sparse coding update. Similarly, a second set of coefficients B is computed based on the trained second convolutional dictionary S and the low-resolution image of the target modality by using a standard convolutional sparse coding update. Then, a high resolution image $Z^{test}$ of the target modality is generated using the trained first coupling convolutional dictionary, the trained second coupling convolutional dictionary, the first set of test coefficients, and the second set of test coefficients as $Z^{test} = WA + VB$.

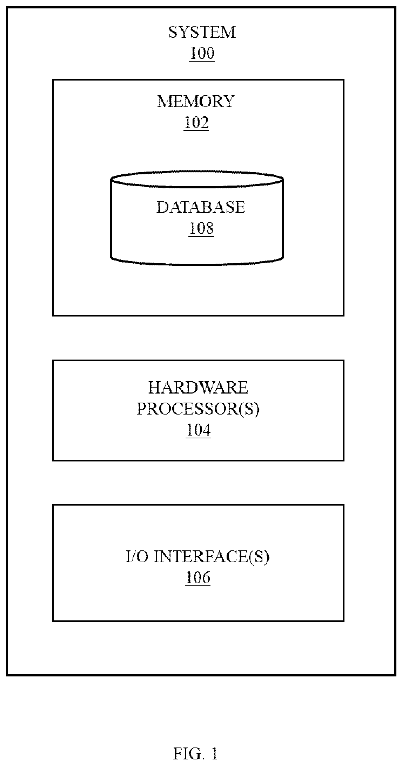

Referring now to the drawings, and more particularly to FIG. 1 through 5, where similar reference characters denote corresponding features consistently throughout the figures, there are shown preferred embodiments and these embodiments are described in the context of the following exemplary system and/or method.

FIG. 1 illustrates an exemplary system for multimodal image super-resolution using convolutional dictionary learning, according to some embodiments of the present disclosure. In an embodiment, the system 100 includes one or more processors (104), communication interface device(s) (106) or Input/Output (I/O) interface(s) (106) or user interface (106), and one or more data storage devices or memory (102) operatively coupled to the one or more processors (104). The one or more processors (104) that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

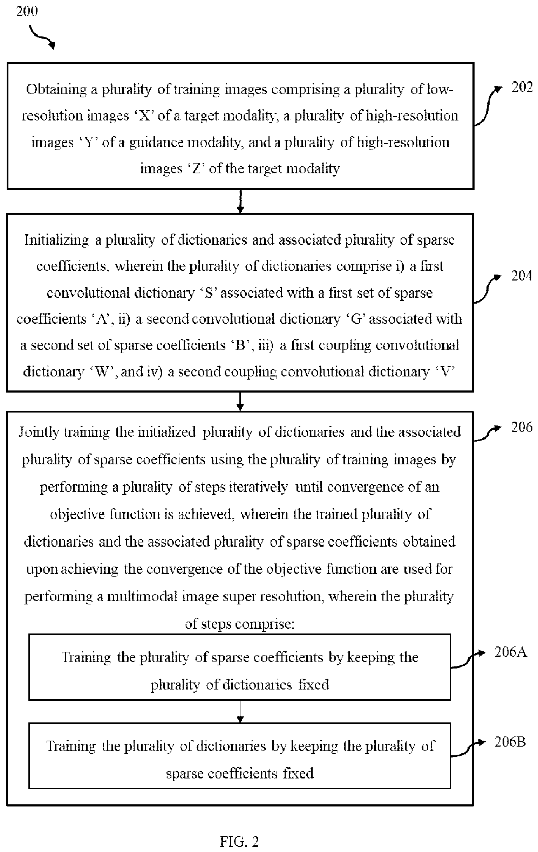

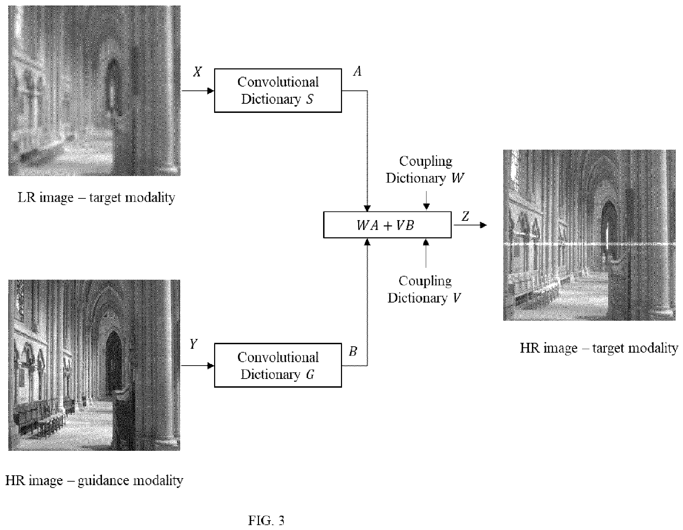

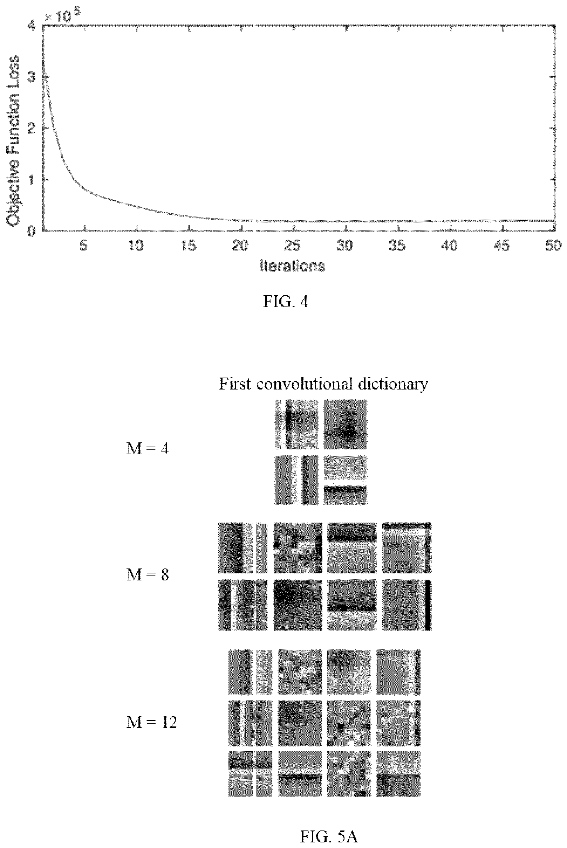

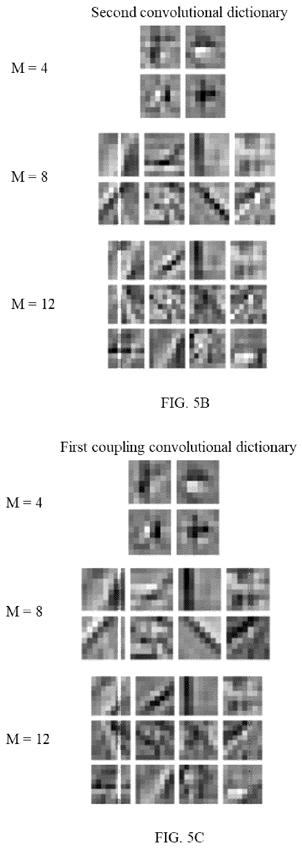

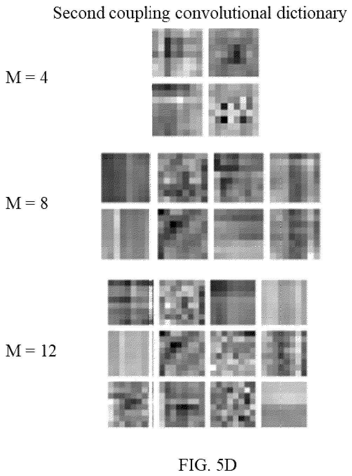

The I/O interface device(s) (106) can include a variety of software and hardware interfaces, for example, a web interface, a graphical user interface, and the like and can facilitate multiple communications within a wide variety of networks and protocol types, including wired networks, for example, LAN, cable, etc., and wireless networks, such as WLAN, cellular, or satellite. In an embodiment, the I/O interface device(s) (106) receives low resolution image of target modality and high resolution image of guidance modality as input and provides high resolution image of target modality as output. The memory (102) may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. Functions of the components of system 100 are explained in conjunction with flow diagram depicted in FIG. 2 and examples illustrated in FIGS. 3 and 5 for multimodal image super-resolution using convolutional dictionary learning.

In an embodiment, the system 100 comprises one or more data storage devices or the memory (102) operatively coupled to the processor(s) (104) and is configured to store instructions for execution of steps of the method (200) depicted in FIG. 2 by the processor(s) or one or more hardware processors (104). The steps of the method of the present disclosure will now be explained with reference to the components or blocks of the system 100 as depicted in FIG. 1, the steps of flow diagrams as depicted in FIG. 2, and examples illustrated in FIGS. 3 and 5. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

FIG. 2 illustrates a flow diagram of a processor implemented method (200) for multimodal image super-resolution using convolutional dictionary learning, according to some embodiments of the present disclosure. At step 202 of the method 200, the one or more hardware processors are configured to obtain a plurality of training images ($i = 1, 2, ..., N$ training images) comprising a set of LR images *'X'* of a target modality, a set of HR images *'Y'* of a guidance modality, and a set of HR images *'Z'* of the target modality. For example, the target modality is NIR (Near InfraRed) or MS (Multispectral) and guidance modality is RGB. Further, at step 204 of the method 200, the one or more hardware processors are configured to initialize a plurality of dictionaries and associated plurality of sparse coefficients. The plurality of dictionaries have $M$ filters each to extract features from images of different modalities. The plurality of dictionaries comprise i) a first convolutional dictionary *'S'* (mathematically represented as $\{s_m\}_{m=1}^{M}$) associated with a first set of sparse coefficients *'A'* ($\{a_{m,i}\}_{m=1}^{M}$), ii) a second convolutional dictionary *'G'* ($\{g_m\}_{m=1}^{M}$) associated with a second set of sparse coefficients *'B'* ($\{b_{m,i}\}_{m=1}^{M}$), iii) a first coupling convolutional dictionary *'W'* ($\{w_m\}_{m=1}^{M}$), and iv) a second coupling convolutional dictionary *'V'* ($\{v_m\}_{m=1}^{M}$). Initializing the dictionaries and coefficients provides a starting point for training process. In an embodiment, all the dictionary filters are initialized with a random matrix with real numbers between 0 and 1 drawn from a uniform distribution. The coefficients are initialized with a matrix with 0's. Different initialization techniques may be used in alternate embodiments. The first convolutional dictionary comprises $M$ filters to extract features from low-resolution images of the target modality. The second convolutional dictionary comprises $M$ filters to extract features from the high-resolution images of the guidance modality. The first coupling convolutional dictionary and the second coupling convolutional dictionary are used to model relationship between the target and guidance modalities i.e., between the first set of sparse coefficients and the second set of sparse coefficients such that equation 3 is satisfied. In equation 3, $z_i$ is an image from the set of HR images *'Z'* of the target modality.

$$z_i = \sum_{m=1}^{M} w_m * a_{m,i} + \sum_{m=1}^{M} v_m * b_{m,i} \ \ldots\ldots (3)$$

Once the plurality of dictionaries and associated plurality of sparse coefficients are initialized, at step 206 of the method 200, the one or more hardware processors are configured to jointly train (or update) the initialized plurality of dictionaries and the associated plurality of sparse coefficients using the plurality of training images by performing steps 206A and 206B iteratively until convergence of an objective function is achieved. The objective function is given by equation 4. Convergence of the objective function is achieved when the loss given by equation 4 does not change significantly over the subsequent iterations, with the absolute value being less than an empirically calculated threshold value. The trained plurality of dictionaries and the associated plurality of sparse coefficients obtained upon achieving the convergence of the objective function are used for performing a multimodal image super resolution.

$$\min_{S,G,A,B,W,V} \frac{1}{2}\|X - SA\|_F^2 + \frac{1}{2}\|Y - GB\|_F^2 + \frac{\mu}{2}\|Z - WA - VB\|_F^2 + \lambda_a\|A\|_1 + \lambda_b\|B\|_1$$

$$\ldots (4)$$

The equation 4 is derived from equation 5 by using block structured notations for dictionaries, coefficients as defined in equation 2 and considering $S_m$, $G_m$, $V_m$, $W_m$ as linear operators such that $S_m a_{m,i} = s_m * a_{m,i}$, $G_m b_{m,i} = g_m * b_{m,i}$, $W_m a_{m,i} = W_m * a_{m,i}$ and $V_m b_{m,i} = v_m * b_{m,i}$.

$$\min_{\{s_m\},\{g_m\},\{a_{m,i}\},\{b_{m,i}\},\{w_m\},\{v_m\}} \frac{1}{2}\Sigma_i\left\|x_i - \Sigma_m s_m * a_{m,i}\right\|_2^2 + \frac{1}{2}\Sigma_i\left\|y_i - \Sigma_m g_m * b_{m,i}\right\|_2^2 +$$

$$\frac{\mu}{2}\Sigma_i\left\|z_i - \Sigma_m w_m * a_{m,i} - \Sigma_m v_m * b_{m,i}\right\|_2^2 + \lambda_a \Sigma_{i,m}\left\|a_{m,i}\right\|_1 + \lambda_b \Sigma_{i,m}\left\|b_{m,i}\right\|_1$$

$$\text{subject to } ||s_m||_2^2 = 1, ||g_m||_2^2 = 1, ||w_m||_2^2 = 1, ||v_m||_2^2 = 1 \ldots (5)$$

The first two terms in equations 4 and 5 ensure that each of the dictionary filters and coefficients are learnt in such a way that they reconstruct the images of respective modality well. The third term defines coupling between coefficients of different image modalities to reconstruct the HR image of target modality. The remaining terms constrain the learned coefficients to be sparse.

At step 206A, the plurality of sparse coefficients are trained (alternatively referred as learnt or updated) by keeping the plurality of dictionaries fixed. The first set of sparse coefficients are updated based on the set of LR images of the target modality, the set of HR images of the target modality, the first convolutional dictionary, the first coupling convolutional dictionary, the second coupling convolutional dictionary, and the second set of sparse coefficients by solving equation 6 using Alternating Direction Method of Multipliers (ADMM) technique. The second set of sparse coefficients are updated based on the set of HR images of guidance modality, the set of HR images of the target modality, the second convolutional dictionary, the first coupling convolutional dictionary, the second coupling convolutional dictionary, and the first set of sparse coefficients by solving equation 7 using ADMM technique.

$$\min_A \frac{1}{2}\|X - SA\|_F^2 + \frac{\mu}{2}\|X' - WA\|_F^2 + \lambda_a\|A\|_1, \text{ wherein } X' = Z - VB \ldots (6)$$

$$\min_B \frac{1}{2}\|Y - GB\|_F^2 + \frac{\mu}{2}\|Y' - VB\|_F^2 + \lambda_b\|B\|_1, \text{ wherein } Y' = Z - WA \ldots (7)$$

Applying ADMM to equation 6 using variable splitting by introducing an auxiliary variable $P_a$ constrained to be equal to the primary variable A results in equation 8.

$$\min_{A,P_a} \frac{1}{2}\|X - SA\|_F^2 + \frac{\mu}{2}\|X' - WA\|_F^2 + \lambda_a\|P_a\|_1 \; subject \; to \; A = P_a \ldots (8)$$

With $U_a$ as dual variable, the ADMM iterations are given by equations 9 to 11, where $\rho$ controls convergence rate.

$$A^{t+1} = \min_A \frac{1}{2}\|X - SA\|_F^2 + \frac{\mu}{2}\|X' - WA\|_F^2 + \frac{\rho}{2}\|A - P_a^t + U_a^t\|_F^2 \ldots (9)$$

$$P_a^{t+1} = \min_{P_a} \frac{\rho}{2}\left\|A^{t+1} - P_a + U_a^t\right\|_F^2 + \lambda_a\|P_a\|_1 \ldots (10)$$

$$U_a^{t+1} = U_a^t + A^{t+1} - P_a^{t+1} \ldots (11)$$

Taking $Q_a = P_a^t - U_a^t$, the solution of A is obtained by taking derivative of equation 9 with respect to A and equating it to zero which results in equation 12.

$$(S^H S + \mu W^H W + \rho I)A = S^H X + \mu W^H X' + \rho \widehat{Q_a} \ \dots\dots \ (12)$$

Applying Discrete Fourier Transform (DFT) to equation 12 results in equation 13 where ^ indicates DFT transform of respective parameters.

$$\left(\hat{S}^H \hat{S} + \mu \widehat{W}^H \widehat{W} + \rho I\right)\hat{A} = \hat{S}^H \hat{X} + \mu \widehat{W}^H \hat{X}' + \rho \widehat{Q_a} \ \dots\dots \ (13)$$

The solution to equation 13 is obtained using iterated Sherman-Morrison algorithm. The solution to equation 10 is obtained by soft-thresholding similar to the work in *[Fangyuan Gao et.al., "Multi-modal convolutional dictionary learning, " IEEE Transactions on Image Processing, vol. 31, pp. 1325- 1339, 2022]* and equation 11 is solved by simple arithmetic operations. Similarly, solution to equation 7 is given by equation 14, where $Q_b = P_b^t - U_b^t$.

$$\left(\hat{G}^H \hat{G} + \mu \hat{V}^H \hat{V} + \rho I\right)\hat{B} = \hat{G}^H \hat{Y} + \mu \hat{V}^H \hat{Y}' + \rho \widehat{Q_b} \ \dots\dots \ (14)$$

The auxiliary variable $P_b$ and dual variable $U_b$ associated with the second set of coefficients B follow standard updates similar to equations 10 and 11.

Once the plurality of sparse coefficients are updated, at step 206B, the plurality of dictionaries are trained by keeping the plurality of sparse coefficients fixed. The first convolutional dictionary is updated based on the set of LR images of the target modality using Convolutional Constrained Method of Optimal Directions (CCMOD) technique. The second convolutional dictionary is updated based on the set of HR images of the guidance modality using the CCMOD technique. The first coupling convolutional dictionary is updated based on the set of HR images of the target modality, the first set of sparse coefficients, the second set of sparse coefficients and the second coupling convolutional dictionary by converting into a standard Convolutional Dictionary Learning (CDL) problem by minimizing $\frac{1}{2}\|X' - WA\|_2^2$, wherein X' = Z - VB.

Similarly, the second coupling convolutional dictionary is updated based on the set of HR images of the target modality, the first set of sparse coefficients, the second set of sparse coefficients and the first coupling convolutional dictionary by converting into a standard CDL problem by minimizing $\frac{1}{2}\|Y' - VB\|_2^2$, wherein Y' = Z - WA. The plurality of dictionaries obtained after training are used to perform MISR.

FIGS. 5A to 5D, collectively referred as FIG. 5, illustrate examples of trained plurality of dictionaries obtained from method of FIG. 2, according to some embodiments of the present disclosure. FIG. 5A illustrates first convolutional dictionary $\{s_m\}_{m=1}^{M}$ that is trained to extract features from images of the target modality (Multispectral (MS) images in this example). FIG. 5B illustrates second convolutional dictionary $\{g_m\}_{m=1}^{M}$ that is trained to extract features from images of the guidance modality (RGB (Red, Green, Blue) images in this example). FIGS. 5C and 5D illustrates first coupling convolutional dictionary $\{w_m\}_{m=1}^{M}$ and second coupling convolutional dictionary $\{v_m\}_{m=1}^{M}$, respectively, that are trained to model relationship between target and guidance modalities. FIG. 5 illustrates each of the trained plurality of dictionaries employing different numbers of filters M = 4, 8 and 12 of atom size k = 8×8 on RGB-MS data. Low-Resolution MS images are known to be dominated by low-frequency components, resulting in a smoothed dictionary $s_m$ emphasizing low frequencies for the LR target modality. On the other hand, High-Resolution guidance modality (RGB) images contain both high and low-frequency components, that enables the learned filters $g_m$ to accommodate a wider frequency range. A high correlation between $g_m$ and $w_m$, as well as between $s_m$ and corresponding $v_m$ can be observed from FIGS. 5A, 5C and FIGS. 5B, 5D respectively. This correlation arises from the shared set of sparse codes (coefficients) $a_m$ and $b_m$, respectively. Also, it can be observed that the learned coupling convolutional dictionaries effectively combine the high frequency information from HR guidance and low frequency information from LR target to synthesize the HR target image.

The plurality of dictionaries obtained upon achieving the convergence of the objective function are used for performing multimodal image super resolution on a new low resolution image $X^{test}$ of the target modality by using a HR image $Y^{test}$ of the guidance modality. Initially a first set of test coefficients $A^{test}$ is computed based on the learned first convolutional dictionary S and the LR image of the target modality $X^{test}$ following a standard convolutional sparse coding update by solving equation 15.

$$\min_{A^{test}} \frac{1}{2}\|X^{test} - SA^{test}\|_F^2 + \lambda_a A^{test} \ \dots\dots \ (15)$$

Similarly, a second set of test coefficients $B^{test}$ is computed based on the learned second convolutional dictionary G and the HR image of the guidance modality $Y^{test}$ following the standard convolutional sparse coding update by solving equation 16.

$$\min_{B^{test}} \frac{1}{2} \|Y^{test} - GB^{test}\|_F^2 + \lambda_b B^{test} \quad \dots \dots (16)$$

Finally, a high resolution image $Z^{test}$ of the target modality is generated using the learned first coupling convolutional dictionary W, the second coupling convolutional dictionary V, the first set of test coefficients, and the second set of test coefficients as $Z^{test} = W\,A^{test} + VB^{test}$. FIG. 3 is a block diagram of an example implementation of method of FIG. 2, according to some embodiments of the present disclosure. Images of a scene in the target modality (MS) and guidance modality (RGB) are obtained. Then, a first set of coefficients A and a second set of coefficients B are computed using the trained first convolutional dictionary S (illustrated in FIG. 5A) and the second convolutional dictionary G (illustrated in FIG. 5B), respectively. Finally, a high resolution image of target modality is generated using the computed first set of coefficients A, a second set of coefficients B, trained first coupling convolutional dictionary (illustrated in FIG. 5C) and trained second coupling convolutional dictionary (illustrated in FIG. 5D).

EXPERIMENTAL RESULTS

**Data Description:** Datasets used for evaluating the performance of the method 200 are: (1) RGB-Multispectral dataset [Ayan Chakrabarti and Todd Zickler, "Statistics of real-world hyperspectral images, " in CVPR 2011. IEEE, 2011, pp. 193-200.] and (2) RGB-NIR dataset [Matthew Brown and Sabine Susstrunk, "Multi-spectral sift for scene category recognition, " in CVPR 2011. IEEE, 2011, pp. 177-184.]. In both the datasets, RGB image is considered as the guidance modality. Multispectral image is considered as the target modality in the first dataset and NIR (Near InfraRed) image is considered as the target modality in the second dataset. The two datasets contain the HR images of both the guidance (Y) and target modalities (Z). For experimentation purpose, LR image of target modality is generated by downsizing the HR image by a required factor and then applying bicubic interpolation on the down sampled image to upscale by the same factor. A factor of 4 is considered for down sampling both RGB/Multispectral and RGB/NIR for a fair comparison with benchmark techniques. Here, the RGB image used as guidance modality is converted to grayscale. Also, the multispectral image at 640 nm is considered in the experiments for the RGB-Multispectral dataset.

**Benchmark Methods:** The method 200 is compared with eight state-of-the-art MISR techniques including:

1) Guided image Filtering (GF [Kaiming He, Jian Sun, and Xiaoou Tang, "Guided image filtering, " IEEE transactions on pattern analysis and machine intelligence, vol. 35, pp. 1397-1409, 06 2013]),
2) Joint Bilateral Filtering (JBF [Johannes Kopf, Michael F Cohen, Dani Lischinski, and Matt Uyttendaele, "Joint bilateral upsampling, " ACM Transactions on Graphics (ToG), vol. 26, no. 3, pp. 96-es, 2007.]),
3) Joint image Restoration (JR [Xiaoyong Shen, Qiong Yan, Li Xu, Lizhuang Ma, and Jiaya Jia, "Multispectral joint image restoration via optimizing a scale map, " IEEE transactions on pattern analysis and machine intelligence, vol. 37, no. 12, pp. 2518-2530, 2015]),
4) Deep Joint image Filtering (DJF [Yijun Li, Jia-Bin Huang, Narendra Ahuja, and Ming-Hsuan Yang, "Deep joint image filtering, " in European Conference on Computer Vision. Springer, 2016, pp. 154-169]),
5) Coupled Dictionary Learning (Coupled DL [Pingfan Song, Xin Deng, Joao FC Mota, Nikos Deligiannis, Pier Luigi Dragotti, and Miguel RD Rodrigues, "Multimodal image super-resolution via joint sparse representations induced by coupled dictionaries," IEEE Transactions on Computational Imaging, vol. 6, pp. 57-72, 2019.]),
6) shallow variant of Joint Coupled Transform Learning (JCTL [Andrew Gigie, A Anil Kumar, Angshul Majumdar, Kriti Kumar, and M Girish Chandra, "Joint coupled transform learning framework for multimodal image super-resolution, " in ICASSP 2021-2021 IEEE International Conference on Acoustics, Speech and Signal Processing (ICASSP). IEEE, 2021, pp. 1640-1644.]),
7) Joint Coupled Deep Transform Learning (JCDTL [R Krishna Kanth, Andrew Gigie, Kriti Kumar, A Anil Kumar, Angshul Majumdar, and Balamuralidhar P, "Multi-modal image super-resolution with joint coupled deep transform learning, " in 2022 30th European Signal Processing Conference (EUSIPCO), 2022, pp. 474-478.]), and
8) Multi-modal Convolutional Dictionary Learning (MCDL [Fangyuan Gao, Xin Deng, Mai Xu, Jingyi Xu, and Pier Luigi Dragotti, "Multi-modal convolutional dictionary learning, " IEEE Transactions on Image Processing, vol. 31, pp. 1325-1339, 2022]).

**Results:** The reconstruction quality of the HR image of the target modality is assessed using Structural SIMilarity (SSIM) and Peak Signal to Noise Ratio (PSNR) metrics. The benchmark methods are trained on 31 image pairs for RGB/NIR and 35 image pairs for RGB/Multispectral. Each $512 \times 512$ image is divided into non-overlapping patches of size $16 \times 16$. During testing, the patches of the test image are reconstructed individually and combined to create the full image.

On the other hand, the techniques using convolutional dictionary learning (method 200 and MCDL) consider non-overlapping patches of size $256 \times 256$ for training, and testing is conducted on the full image. The method 200 is trained only on 10 image pairs for each dataset instead of 31 and 35 image pairs, respectively, considered for benchmark methods. The hyperparameters associated with all the techniques are tuned using grid search. The method 200 is implemented using the SPORCO library in MATLAB. The results for method 200 and MCDL are reported using 4 filters of size $8 \times 8$ that gave optimal performance for both the datasets.

Table 1

| RGB/NIR Dataset (4x up sampling) | | | | | | | | | | |
|---|---|---|---|---|---|---|---|---|---|---|
| Test image | Indoor 4 | | Indoor 5 | | Indoor 11 | | Indoor 16 | | Indoor 21 | |
| Method | PSNR | SSIM | PSNR | SSIM | PSNR | SSIM | PSNR | SSIM | PSNR | SSIM |
| Method 200 | **31.423** | 0.925 | **32.263** | 0.933 | **31.387** | **0.908** | <u>32.128</u> | 0.930 | **31.257** | <u>0.911</u> |
| MCDL | 28.932 | 0.902 | 28.307 | 0.908 | 28.874 | 0.842 | 30.601 | 0.914 | 28.787 | 0.865 |
| JCDTL | 28.783 | 0.899 | 30.414 | 0.915 | <u>30.384</u> | 0.903 | 32.018 | 0.916 | 29.442 | 0.893 |
| JCTL | 27.961 | 0.915 | 30.580 | 0.937 | 26.808 | 0.893 | 30.438 | 0.925 | 26.554 | 0.895 |
| Coupled DL | <u>30.629</u> | <u>0.942</u> | 29.865 | 0.951 | 28.879 | 0.896 | **33.070** | **0.950** | <u>29.668</u> | **0.915** |
| DJF | 26.958 | 0.898 | 27.804 | 0.899 | 27.015 | 0.817 | 30.149 | 0.890 | 27.619 | 0.853 |
| JR | 22.271 | 0.841 | 25.076 | 0.939 | 22.864 | 0.815 | 23.502 | 0.867 | 21.626 | 0.794 |
| GF | 29.854 | **0.946** | <u>32.058</u> | **0.971** | 27.589 | 0.901 | 31.916 | <u>0.938</u> | 27.133 | 0.909 |
| JBF | 26.354 | 0.919 | 31.283 | <u>0.968</u> | 26.480 | <u>0.906</u> | 30.431 | 0.929 | 25.746 | 0.902 |

Table 2

| RGB/Multispectral Dataset (4x up sampling) | | | | | | | | | | |
|---|---|---|---|---|---|---|---|---|---|---|
| Test image | Imge6 | | Imge7 | | Imgf5 | | Imgf7 | | Imgh3 | |
| Method | PSNR | SSIM | PSNR | SSIM | PSNR | SSIM | PSNR | SSIM | PSNR | SSIM |
| Method 200 | **31.779** | **0.856** | **36.732** | <u>0.928</u> | **38.984** | **0.954** | **34.830** | **0.907** | **40.361** | **0.961** |
| MCDL | 25.477 | 0.605 | 28.955 | 0.709 | 33.426 | 0.880 | 27.894 | 0.722 | 35.564 | 0.896 |
| JCDTL | <u>31.441</u> | <u>0.841</u> | <u>35.496</u> | 0.899 | <u>37.522</u> | <u>0.947</u> | <u>33.339</u> | 0.888 | <u>39.403</u> | <u>0.948</u> |
| JCTL | 28.793 | 0.814 | 32.669 | 0.889 | 36.277 | 0.939 | 31.964 | 0.864 | 37.140 | 0.941 |
| Coupled DL | 31.049 | 0.835 | 33.222 | 0.877 | 34.239 | 0.906 | 31.401 | 0.878 | 36.107 | 0.920 |
| DJF | 20.968 | 0.828 | 26.732 | **0.938** | 32.588 | 0.824 | 23.851 | <u>0.902</u> | 30.788 | 0.924 |
| JR | 26.519 | 0.814 | 32.781 | 0.889 | 33.933 | 0.890 | 29.295 | 0.804 | 33.999 | 0.922 |
| GF | 25.332 | 0.774 | 29.709 | 0.869 | 31.706 | 0.901 | 28.045 | 0.880 | 33.518 | 0.807 |
| JBF | 25.535 | 0.746 | 29.655 | 0.799 | 32.411 | 0.886 | 28.874 | 0.839 | 34.461 | 0.902 |

Tables 1 and 2 summarize the MISR results for the first and second datasets, respectively, obtained with 5 test image pairs. It can be observed that the joint learning-based approaches (Coupled DL, JCTL, JCDTL, and the method 200) display superior performance compared to other filtering (DJF, JR, GF, and JBF) and two-stage (MCDL) based approaches for most of the images. This is because joint learning enables effective learning of discriminative and common features or representations from each modality (LR image of target and HR image of guidance) that assists in improved reconstruction of HR image of target modality. Among the joint learning methods, the method 200 shows improved reconstruction compared to other benchmark methods for most of the images, despite training with limited data. This demonstrates the potential of using shift-invariant dictionaries, i.e., convolutional dictionaries, in learning representation for robust and effective modelling for MISR. It is important to note that compared to the two-stage CDL-based MCDL approach that requires learning 6 convolutional dictionaries and 3 associated sparse coefficients (1 common and 2 unique for the respective modality), method 200 requires learning only 4 convolutional dictionaries and 2 associated sparse coefficients. Thus, even with reduced complexity, the disclosed method provides improved performance over the MCDL approach as shown in tables 1 and 2. The convergence plot of the method 200 is given in FIG. 4, which shows that the method converges within a few iterations. The method 200 took approximately 10 minutes for training over 10 image pairs with 50 iterations and approximately 0.9 seconds for testing on one image pair on AMD Ryzen 5 4500U CPU@2.3GHz with 16GB RAM without GPU. In contrast, the existing deep learning methods, like DJF, require approximately 2 hours to train and 2 seconds for testing, despite using a GPU accelerator.

The written description describes the subject matter herein to enable any person skilled in the art to make and use the embodiments. The scope of the subject matter embodiments is defined by the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200), comprising:

   obtaining (202), via one or more hardware processors, a plurality of training images comprising a set of low-resolution images 'X' of a target modality, a set of high-resolution images 'Y' of a guidance modality, and a set of high-resolution images 'Z' of the target modality;
   initializing (204), via the one or more hardware processors, a plurality of dictionaries and associated plurality of sparse coefficients, wherein the plurality of dictionaries comprise i) a first convolutional dictionary 'S' associated with a first set of sparse coefficients 'A' among the plurality of sparse coefficients that is to be learned to capture features of the set of low-resolution images 'X' of the target modality, ii) a second convolutional dictionary 'G' associated with a second set of sparse coefficients 'B' among the plurality of sparse coefficients that is to be learned to capture features of the set of high resolution images 'Y' of the guidance modality, iii) a first coupling convolutional dictionary 'W', and iv) a second coupling convolutional dictionary 'V', wherein the first and second coupling convolutional dictionaries 'W', 'V' are used to model the relationship between the target and the guidance modalities by modeling the relationship between the first set of sparse coefficients 'A' and the second set of sparse coefficients 'B' in reconstructing the set of high-resolution images 'Z' of the target modality; and

jointly training (206), via the one or more hardware processors, the initialized plurality of dictionaries and the associated plurality of sparse coefficients using the plurality of training images by performing a plurality of steps iteratively until convergence of an objective function is achieved, wherein the trained plurality of dictionaries and the associated plurality of sparse coefficients obtained upon achieving the convergence of the objective function are used for performing a multimodal image super resolution, and wherein the plurality of steps comprise:

training (206A) the plurality of sparse coefficients by keeping the plurality of dictionaries fixed; and
training (206B) the plurality of dictionaries by keeping the plurality of sparse coefficients fixed.

2. The method as claimed in claim 1, wherein the objective function is represented as:

$$\min_{S,G,A,B,W,V} \frac{1}{2}\|X - SA\|_F^2 + \frac{1}{2}\|Y - GB\|_F^2 + \frac{\mu}{2}\|Z - WA - VB\|_F^2 + \lambda_a\|A\|_1 + \lambda_b\|B\|_1.$$

3. The method as claimed in claim 1, wherein training the plurality of sparse coefficients by keeping the plurality of dictionaries fixed comprises:

updating the first set of sparse coefficients based on the set of low-resolution images of the target modality, the set of high-resolution images of the target modality, the first convolutional dictionary, the first coupling convolutional dictionary, the second coupling convolutional dictionary, and the second set of sparse coefficients by solving

$$\min_A \frac{1}{2}\|X - SA\|_F^2 + \frac{\mu}{2}\|X' - WA\|_F^2 + \lambda_a\|A\|_1,$$ wherein $X' = Z - VB$; and

updating the second set of sparse coefficients based on the set of high-resolution images of guidance modality, the set of high-resolution images of the target modality, the second convolutional dictionary, the first coupling convolutional dictionary, the second coupling convolutional dictionary, and the first set of sparse coefficients by solving $$\min_B \frac{1}{2}\|Y - GB\|_F^2 + \frac{\mu}{2}\|Y' - VB\|_F^2 + \lambda_b\|B\|_1,$$ wherein $Y' = Z - WA$;

and wherein training the plurality of dictionaries by keeping the plurality of sparse coefficients fixed comprises:

updating the first convolutional dictionary based on the set of low-resolution images of the target modality;
updating the second convolutional dictionary based on the set of high-resolution images of the guidance modality;
updating the first coupling convolutional dictionary based on the set of high-resolution images of the target modality, the first set of sparse coefficients, the second set of sparse coefficients and the second coupling convolutional dictionary by converting into a standard Convolutional Dictionary Learning (CDL) problem; and
updating the second coupling convolutional dictionary based on the set of high-resolution images of the target modality, the first set of sparse coefficients, the second set of sparse coefficients and the first coupling convolutional dictionary by converting into a standard CDL problem.

4. The method as claimed in claim 3, wherein converting the first coupling convolutional dictionary into a standard CDL problem comprises minimizing $$\frac{1}{2}\|X' - WA\|_2^2,$$ wherein $X' = Z - VB$, and wherein converting the second coupling convolutional dictionary into a standard CDL problem comprises minimizing $$\frac{1}{2}\|Y' - VB\|_2^2,$$ wherein $Y' = Z - WA$.

5. The method as claimed in claim 1, comprising performing multimodal image super resolution on a new low resolution image of the target modality by:

obtaining the new low-resolution image $X^{test}$ of the target modality and a high-resolution image $Y^{test}$ of the guidance modality;
computing a first set of test coefficients $A^{test}$ based on the trained first convolutional dictionary $S$ and the low-resolution image of the target modality $X^{test}$ by using a standard convolutional sparse coding update;
computing a second set of test coefficients $B^{test}$ based on the trained second convolutional dictionary $G$ and the high-resolution image of the guidance modality $Y^{test}$ by using the standard convolutional sparse coding update; and
generating a high resolution image $Z^{test}$ of the target modality using the trained first coupling convolutional dictionary, the trained second coupling convolutional dictionary, the first set of test coefficients, and the second set of test coefficients as $Z^{test} = W\,A^{test} + VB^{test}$.

6. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

obtain a plurality of training images comprising a set of low-resolution images 'X' of a target modality, a set of high-resolution images 'Y' of a guidance modality, and a set of high-resolution images 'Z' of the target modality;
initialize a plurality of dictionaries and associated plurality of sparse coefficients, wherein the plurality of dictionaries comprise i) a first convolutional dictionary 'S' associated with a first set of sparse coefficients 'A' among the plurality of sparse coefficients that is to be learned to capture features of the set of low-resolution images 'X' of the target modality, ii) a second convolutional dictionary 'G' associated with a second set of sparse coefficients 'B' among the plurality of sparse coefficients that is to be learned to capture features of the set of high resolution images 'Y' of the guidance modality, iii) a first coupling convolutional dictionary 'W', and iv) a second coupling convolutional dictionary 'V', wherein the first and second coupling convolutional dictionaries 'W', 'V' are used to model the relationship between the target and the guidance modalities by modeling the relationship between the first set of sparse coefficients 'A' and the second set of sparse coefficients 'B' in reconstructing the set of high-resolution images 'Z' of the target modality; and
jointly train the initialized plurality of dictionaries and the associated plurality of sparse coefficients using the plurality of training images by performing a plurality of steps iteratively until convergence of an objective function is achieved, wherein the trained plurality of dictionaries and the associated plurality of sparse coefficients obtained upon achieving the convergence of the objective function are used for performing a multimodal image super resolution, and wherein the plurality of steps comprise:

training the plurality of sparse coefficients by keeping the plurality of dictionaries fixed; and
training the plurality of dictionaries by keeping the plurality of sparse coefficients fixed.

7. The system as claimed in claim 6, wherein the objective function is represented as:

$$\min_{S,G,A,B,W,V} \frac{1}{2}\|X - SA\|_F^2 + \frac{1}{2}\|Y - GB\|_F^2 + \frac{\mu}{2}\|Z - WA - VB\|_F^2 + \lambda_a\|A\|_1 + \lambda_b\|B\|_1 \,.$$

8. The system as claimed in claim 6, wherein training the plurality of sparse coefficients by keeping the plurality of dictionaries fixed comprises:

updating the first set of sparse coefficients based on the set of low-resolution images of the target modality, the set of high-resolution images of the target modality, the first convolutional dictionary, the first coupling convolutional dictionary, the second coupling convolutional dictionary, and the second set of sparse coefficients by solving

$\min_A \frac{1}{2}\|X - SA\|_F^2 + \frac{\mu}{2}\|X' - WA\|_F^2 + \lambda_a\|A\|_1$ , wherein $X' = Z - VB$; and

updating the second set of sparse coefficients based on the set of high-resolution images of guidance modality, the set of high-resolution images of the target modality, the second convolutional dictionary, the first coupling convolutional dictionary, the second coupling convolutional dictionary, and the first set of sparse coefficients by solving $\min_B \frac{1}{2}\|Y - GB\|_F^2 + \frac{\mu}{2}\|Y' - VB\|_F^2 + \lambda_b\|B\|_1$ , wherein $Y' = Z - WA$,

and wherein training the plurality of dictionaries by keeping the plurality of sparse coefficients fixed comprises:

updating the first convolutional dictionary based on the set of low-resolution images of the target modality;
updating the second convolutional dictionary based on the set of high-resolution images of the guidance modality;
updating the first coupling convolutional dictionary based on the set of high-resolution images of the target modality, the first set of sparse coefficients, the second set of sparse coefficients and the second coupling convolutional dictionary by converting into a standard Convolutional Dictionary Learning (CDL) problem; and updating the second coupling convolutional dictionary based on the set of high-resolution images of the target modality, the first set of sparse coefficients, the second set of sparse coefficients and the first coupling convolutional dictionary by converting into a standard CDL problem.

9. The system as claimed in claim 8, wherein converting the first coupling convolutional dictionary into a standard CDL problem comprises minimizing $\frac{1}{2}\|X' - WA\|_2^2$, wherein $X' = Z - VB$, and wherein converting the second coupling convolutional dictionary into a standard CDL problem comprises minimizing $\frac{1}{2}\|Y' - VB\|_2^2$, wherein $Y' = Z - WA$.

10. The system as claimed in claim 6, comprising performing multimodal image super resolution on a new low resolution image of the target modality by:

   obtaining the new low-resolution image $X^{test}$ of the target modality and a high-resolution image $Y^{test}$ of the guidance modality;
   computing a first set of test coefficients $A^{test}$ based on the trained first convolutional dictionary S and the low-resolution image of the target modality $X^{test}$ by using a standard convolutional sparse coding update;
   computing a second set of test coefficients $B^{test}$ based on the trained second convolutional dictionary G and the high-resolution image of the guidance modality $Y^{test}$ by using the standard convolutional sparse coding update; and
   generating a high resolution image $Z^{test}$ of the target modality using the trained first coupling convolutional dictionary, the trained second coupling convolutional dictionary, the first set of test coefficients, and the second set of test coefficients as $Z^{test} = W A^{test} + V B^{test}$.

11. One or more non-transitory machine-readable information storage mediums comprising one or more instructions which when executed by one or more hardware processors cause:

   obtaining a plurality of training images further comprising a set of low-resolution images 'X' of a target modality, a set of high-resolution images 'Y' of a guidance modality, and a set of high-resolution images 'Z' of the target modality;
   initializing a plurality of dictionaries and associated plurality of sparse coefficients, wherein the plurality of dictionaries comprise i) a first convolutional dictionary 'S' associated with a first set of sparse coefficients 'A' among the plurality of sparse coefficients that is to be learned to capture features of the set of low-resolution images 'X' of the target modality, ii) a second convolutional dictionary 'G' associated with a second set of sparse coefficients 'B' among the plurality of sparse coefficients that is to be learned to capture features of the set of high resolution images 'Y' of the guidance modality, iii) a first coupling convolutional dictionary 'W', and iv) a second coupling convolutional dictionary 'V', wherein the first and second coupling convolutional dictionaries 'W', 'V' are used to model the relationship between the target and the guidance modalities by modeling the relationship between the first set of sparse coefficients 'A' and the second set of sparse coefficients 'B' in reconstructing the set of high-resolution images 'Z' of the target modality; and
   jointly training the initialized plurality of dictionaries and the associated plurality of sparse coefficients using the plurality of training images by performing a plurality of steps iteratively until convergence of an objective function is achieved, wherein the trained plurality of dictionaries and the associated plurality of sparse coefficients obtained upon achieving the convergence of the objective function are used for performing a multimodal image super resolution, and wherein the plurality of steps comprise:

      training the plurality of sparse coefficients by keeping the plurality of dictionaries fixed; and
      training the plurality of dictionaries by keeping the plurality of sparse coefficients fixed.

12. The one or more non-transitory machine-readable information storage mediums as claimed in claim 11, wherein the objective function is represented as:

$$\min_{S,G,A,B,W,V} \frac{1}{2}\|X - SA\|_F^2 + \frac{1}{2}\|Y - GB\|_F^2 + \frac{\mu}{2}\|Z - WA - VB\|_F^2 + \lambda_a\|A\|_1 + \lambda_b\|B\|_1 \ .$$

13. The one or more non-transitory machine-readable information storage mediums as claimed in claim 11, wherein training the plurality of sparse coefficients by keeping the plurality of dictionaries fixed comprises:

updating the first set of sparse coefficients based on the set of low-resolution images of the target modality, the set of high-resolution images of the target modality, the first convolutional dictionary, the first coupling convolutional dictionary, the second coupling convolutional dictionary, and the second set of sparse coefficients by solving

$$\min_A \frac{1}{2}\|X - SA\|_F^2 + \frac{\mu}{2}\|X' - WA\|_F^2 + \lambda_a\|A\|_1$$ , wherein $X' = Z - VB$; and

updating the second set of sparse coefficients based on the set of high-resolution images of guidance modality, the set of high-resolution images of the target modality, the second convolutional dictionary, the first coupling convolutional dictionary, the second coupling convolutional dictionary, and the first set of sparse coefficients by solving $$\min_B \frac{1}{2}\|Y - GB\|_F^2 + \frac{\mu}{2}\|Y' - VB\|_F^2 + \lambda_b\|B\|_1$$ , wherein $Y' = Z - WA,$

and wherein training the plurality of dictionaries by keeping the plurality of sparse coefficients fixed comprises:

updating the first convolutional dictionary based on the set of low-resolution images of the target modality;
updating the second convolutional dictionary based on the set of high-resolution images of the guidance modality;
updating the first coupling convolutional dictionary based on the set of high-resolution images of the target modality, the first set of sparse coefficients, the second set of sparse coefficients and the second coupling convolutional dictionary by converting into a standard Convolutional Dictionary Learning (CDL) problem; and
updating the second coupling convolutional dictionary based on the set of high-resolution images of the target modality, the first set of sparse coefficients, the second set of sparse coefficients and the first coupling convolutional dictionary by converting into a standard CDL problem.

14. The one or more non-transitory machine-readable information storage mediums as claimed in claim 13, wherein converting the first coupling convolutional dictionary into a standard CDL problem comprises minimizing $\frac{1}{2}\|X' - WA\|_2^2$ , wherein $X' = Z - VB$, and wherein converting the second coupling convolutional dictionary into a standard CDL problem comprises minimizing $\frac{1}{2}\|Y' - VB\|_2^2$ , wherein $Y' = Z - WA$.

15. The one or more non-transitory machine-readable information storage mediums as claimed in claim 11, wherein the one or more instructions which when executed by the one or more hardware processors further cause performing multimodal image super resolution on a new low resolution image of the target modality by:

obtaining the new low-resolution image $X^{test}$ of the target modality and a high-resolution image $Y^{test}$ of the guidance modality;
computing a first set of test coefficients $A^{test}$ based on the trained first convolutional dictionary S and the low-resolution image of the target modality $X^{test}$ by using a standard convolutional sparse coding update;
computing a second set of test coefficients $B^{test}$ based on the trained second convolutional dictionary G and the high-resolution image of the guidance modality $Y^{test}$ by using the standard convolutional sparse coding update; and
generating a high resolution image $Z^{test}$ of the target modality using the trained first coupling convolutional dictionary, the trained second coupling convolutional dictionary, the first set of test coefficients, and the second set of test coefficients as $Z^{test} = W A^{test} + VB^{test}$.

**Patentansprüche**

1. Prozessorimplementiertes Verfahren (200), umfassend:

Erhalten (202), über einen oder mehrere Hardwareprozessoren, einer Mehrzahl von Trainingsbildern, die einen Satz von Bildern mit niedriger Auflösung 'X' einer Zielmodalität, einen Satz von Bildern mit hoher Auflösung 'Y' einer Führungsmodalität und einen Satz von Bildern mit hoher Auflösung 'Z' der Zielmodalität umfassen;
Initialisieren (204), über den einen oder die mehreren Hardwareprozessoren, einer Mehrzahl von Wörterbüchern und einer zugeordneten Mehrzahl von spärlichen Koeffizienten, wobei die Mehrzahl von Wörterbüchern i) ein erstes Faltungswörterbuch 'S', das einem ersten Satz von spärlichen Koeffizienten 'A' unter der Mehrzahl von spärlichen Koeffizienten zugeordnet ist, der zu lernen ist, um Merkmale des Satzes von Bildern mit niedriger Auflösung *'X'* der Zielmodalität zu erfassen, ii) ein zweites Faltungswörterbuch *'G'*, das einem zweiten Satz von spärlichen Koeffizienten *'B'* unter der Mehrzahl von spärlichen Koeffizienten zugeordnet ist, der zu lernen ist, um Merkmale des Satzes von Bildern mit hoher Auflösung *'Y'* der Führungsmodalität zu erfassen, iii) ein erstes Kopplungsfaltungswörterbuch *'W'* und iv) ein zweites Kopplungsfaltungswörterbuch *'V'* umfasst, wobei das erste und das zweite Kopplungsfaltungswörterbuch *'W', 'V'* verwendet werden, um die Beziehung zwischen dem Ziel und den Führungsmodalitäten durch Modellieren der Beziehung zwischen dem ersten Satz von spärlichen Koeffizienten *'A'* und dem zweiten Satz von spärlichen Koeffizienten *'B'* beim Rekonstruieren des Satzes von Bildern mit hoher Auflösung *'Z'* der Zielmodalität zu modellieren; und

gemeinsames Trainieren (206), über den einen oder die mehreren Hardwareprozessoren, der initialisierten Mehrzahl von Wörterbüchern und der zugeordneten Mehrzahl von spärlichen Koeffizienten unter Verwendung der Mehrzahl von Trainingsbildern durch iteratives Durchführen einer Mehrzahl von Schritten, bis Konvergenz einer Zielfunktion erreicht ist, wobei die trainierte Mehrzahl von Wörterbüchern und die zugeordnete Mehrzahl von spärlichen Koeffizienten, die beim Erreichen der Konvergenz der Zielfunktion erhalten werden, zum Durchführen einer multimodalen Bildsuperauflösung verwendet werden, und wobei die Mehrzahl von Schritten umfasst:

> Trainieren (206A) der Mehrzahl von spärlichen Koeffizienten durch Festhalten der Mehrzahl von Wörterbüchern; und
> Trainieren (206B) der Mehrzahl von Wörterbüchern durch Festhalten der Mehrzahl von spärlichen Koeffizienten.

**2.** Verfahren nach Anspruch 1, wobei die Zielfunktion dargestellt wird als:

$$\min_{S,G,A,B,W,V} \frac{1}{2}\|X - SA\|_F^2 + \frac{1}{2}\|Y - GB\|_F^2 + \frac{\mu}{2}\|Z - WA - VB\|_F^2 + \lambda_a\|A\|_1 +$$
$$\lambda_b\|B\|_1.$$

**3.** Verfahren nach Anspruch 1, wobei das Trainieren der Mehrzahl von spärlichen Koeffizienten durch Festhalten der Mehrzahl von Wörterbüchern umfasst:

> Aktualisieren des ersten Satzes von spärlichen Koeffizienten basierend auf dem Satz von Bildern mit niedriger Auflösung der Zielmodalität, dem Satz von Bildern mit hoher Auflösung der Zielmodalität, dem ersten Faltungswörterbuch, dem ersten Kopplungsfaltungswörterbuch, dem zweiten Kopplungsfaltungswörterbuch und dem zweiten Satz von spärlichen Koeffizienten durch Lösen von
> $$\min_A \frac{1}{2}\|X - SA\|_F^2 + \frac{\mu}{2}\|X' - WA\|_F^2 + \lambda_a\|A\|_1$$ , wobei *X'* = Z - VB; und
> Aktualisieren des zweiten Satzes von spärlichen Koeffizienten basierend auf dem Satz von Bildern mit hoher Auflösung der Führungsmodalität, dem Satz von Bildern mit hoher Auflösung der Zielmodalität, dem zweiten Faltungswörterbuch, dem ersten Kopplungsfaltungswörterbuch, dem zweiten Kopplungsfaltungswörterbuch und dem ersten Satz von spärlichen Koeffizienten durch Lösen von
> $$\min_B \frac{1}{2}\|Y - GB\|_F^2 + \frac{\mu}{2}\|Y' - VB\|_F^2 + \lambda_b\|B\|_1$$ , wobei *Y'* = Z-WA;
>
> und wobei das Trainieren der Mehrzahl von Wörterbüchern durch Festhalten der Mehrzahl von spärlichen Koeffizienten umfasst:

>> Aktualisieren des ersten Faltungswörterbuchs basierend auf dem Satz von Bildern mit niedriger Auflösung der Zielmodalität;
>> Aktualisieren des zweiten Faltungswörterbuchs basierend auf dem Satz von Bildern mit hoher Auflösung der Führungsmodalität;
>> Aktualisieren des ersten Kopplungsfaltungswörterbuchs basierend auf dem Satz von Bildern mit hoher Auflösung der Zielmodalität, dem ersten Satz von spärlichen Koeffizienten, dem zweiten Satz von spärlichen Koeffizienten und dem zweiten Kopplungsfaltungswörterbuch durch Umwandeln in ein Standard-Faltungswörterbuch-Lernproblem (Convolutional Dictionary Learning, CDL-Problem); und
>> Aktualisieren des zweiten Kopplungsfaltungswörterbuchs basierend auf dem Satz von Bildern mit hoher Auflösung der Zielmodalität, dem ersten Satz von spärlichen Koeffizienten, dem zweiten Satz von spärlichen Koeffizienten und dem ersten Kopplungsfaltungswörterbuch durch Umwandeln in ein Standard-CDL-Problem.

4. Verfahren nach Anspruch 3, wobei das Umwandeln des ersten Kopplungsfaltungswörterbuchs in ein Standard-CDL-Problem das Minimieren von $\frac{1}{2}\|X' - WA\|_2^2$ umfasst, wobei $X' = Z - VB$, und wobei das Umwandeln des zweiten Kopplungsfaltungswörterbuchs in ein Standard-CDL-Problem das Minimieren von $\frac{1}{2}\|Y' - VB\|_2^2$ umfasst, wobei $Y' = Z - WA$.

5. Verfahren nach Anspruch 1, umfassend das Durchführen einer multimodalen Bildsuperauflösung an einem neuen Bild mit niedriger Auflösung der Zielmodalität durch:

Erhalten des neuen Bildes mit niedriger Auflösung $X^{Test}$ der Zielmodalität und eines Bildes mit hoher Auflösung $Y^{Test}$ der Führungsmodalität;
Berechnen eines ersten Satzes von Testkoeffizienten $A^{Test}$ basierend auf dem trainierten ersten Faltungswörterbuch $S$ und dem Bild mit niedriger Auflösung der Zielmodalität $X^{Test}$ unter Verwendung einer Standard-Faltungsspärlich-Codierungsaktualisierung;
Berechnen eines zweiten Satzes von Testkoeffizienten $B^{Test}$ basierend auf dem trainierten zweiten Faltungswörterbuch $G$ und dem Bild mit hoher Auflösung der Führungsmodalität $Y^{Test}$ unter Verwendung der Standard-Faltungsspärlich-Codierungsaktualisierung; und
Erzeugen eines Bildes mit hoher Auflösung $Z^{Test}$ der Zielmodalität unter Verwendung des trainierten ersten Kopplungsfaltungswörterbuchs, des trainierten zweiten Kopplungsfaltungswörterbuchs, des ersten Satzes von Testkoeffizienten und des zweiten Satzes von Testkoeffizienten als $Z^{Test} = WA^{Test} + VB^{Test}$.

6. System (100), umfassend:

einen Speicher (102), der Anweisungen speichert;
eine oder mehrere Kommunikationsschnittstellen (106); und
einen oder mehrere Hardwareprozessoren (104), die über die eine oder die mehreren Kommunikationsschnittstellen (106) mit dem Speicher (102) gekoppelt sind, wobei der eine oder die mehreren Hardwareprozessoren (104) durch die Anweisungen konfiguriert sind zum:

Erhalten einer Mehrzahl von Trainingsbildern, die einen Satz von Bildern mit niedriger Auflösung 'X' einer Zielmodalität, einen Satz von Bildern mit hoher Auflösung 'Y' einer Führungsmodalität und einen Satz von Bildern mit hoher Auflösung 'Z' der Zielmodalität umfassen;
Initialisieren einer Mehrzahl von Wörterbüchern und einer zugeordneten Mehrzahl von spärlichen Koeffizienten, wobei die Mehrzahl von Wörterbüchern i) ein erstes Faltungswörterbuch 'S', das einem ersten Satz von spärlichen Koeffizienten 'A' unter der Mehrzahl von spärlichen Koeffizienten zugeordnet ist, der zu lernen ist, um Merkmale des Satzes von Bildern mit niedriger Auflösung 'X' der Zielmodalität zu erfassen, ii) ein zweites Faltungswörterbuch 'G', das einem zweiten Satz von spärlichen Koeffizienten 'B' unter der Mehrzahl von spärlichen Koeffizienten zugeordnet ist, der zu lernen ist, um Merkmale des Satzes von Bildern mit hoher Auflösung 'Y' der Führungsmodalität zu erfassen, iii) ein erstes Kopplungsfaltungswörterbuch 'W' und iv) ein zweites Kopplungsfaltungswörterbuch 'V' umfasst, wobei das erste und das zweite Kopplungsfaltungswörterbuch 'W', 'V' verwendet werden, um die Beziehung zwischen dem Ziel und den Führungsmodalitäten durch Modellieren der Beziehung zwischen dem ersten Satz von spärlichen Koeffizienten 'A' und dem zweiten Satz von spärlichen Koeffizienten 'B' beim Rekonstruieren des Satzes von Bildern mit hoher Auflösung 'Z' der Zielmodalität zu modellieren; und
gemeinsames Trainieren der initialisierten Mehrzahl von Wörterbüchern und der zugeordneten Mehrzahl von spärlichen Koeffizienten unter Verwendung der Mehrzahl von Trainingsbildern durch iteratives Durchführen einer Mehrzahl von Schritten, bis Konvergenz einer Zielfunktion erreicht ist, wobei die trainierte Mehrzahl von Wörterbüchern und die zugeordnete Mehrzahl von spärlichen Koeffizienten, die beim Erreichen der Konvergenz der Zielfunktion erhalten werden, zum Durchführen einer multimodalen Bildsuperauflösung verwendet werden, und wobei die Mehrzahl von Schritten umfasst:

Trainieren der Mehrzahl von spärlichen Koeffizienten durch Festhalten der Mehrzahl von Wörterbüchern; und

Trainieren der Mehrzahl von Wörterbüchern durch Festhalten der Mehrzahl von spärlichen Koeffizienten.

**7.** System nach Anspruch 6, wobei die Zielfunktion dargestellt wird als:

$$\min_{S,G,A,B,W,V} \frac{1}{2}\|X - SA\|_F^2 + \frac{1}{2}\|Y - GB\|_F^2 + \frac{\mu}{2}\|Z - WA - VB\|_F^2 + \lambda_a\|A\|_1 +$$

$$\lambda_b\|B\|_1.$$

**8.** System nach Anspruch 6, wobei das Trainieren der Mehrzahl von spärlichen Koeffizienten durch Festhalten der Mehrzahl von Wörterbüchern umfasst:

Aktualisieren des ersten Satzes von spärlichen Koeffizienten basierend auf dem Satz von Bildern mit niedriger Auflösung der Zielmodalität, dem Satz von Bildern mit hoher Auflösung der Zielmodalität, dem ersten Faltungswörterbuch, dem ersten Kopplungsfaltungswörterbuch, dem zweiten Kopplungsfaltungswörterbuch und dem zweiten Satz von spärlichen Koeffizienten durch Lösen von

$$\min_A \frac{1}{2}\|X - SA\|_F^2 + \frac{\mu}{2}\|X' - WA\|_F^2 + \lambda_a\|A\|_1$$ , wobei $X' = Z - VB$; und

Aktualisieren des zweiten Satzes von spärlichen Koeffizienten basierend auf dem Satz von Bildern mit hoher Auflösung der Führungsmodalität, dem Satz von Bildern mit hoher Auflösung der Zielmodalität, dem zweiten Faltungswörterbuch, dem ersten Kopplungsfaltungswörterbuch, dem zweiten Kopplungsfaltungswörterbuch und dem ersten Satz von spärlichen Koeffizienten durch Lösen von

$$\min_B \frac{1}{2}\|Y - GB\|_F^2 + \frac{\mu}{2}\|Y' - VB\|_F^2 + \lambda_b\|B\|_1$$ , wobei $Y' = Z - WA$,

und wobei das Trainieren der Mehrzahl von Wörterbüchern durch Festhalten der Mehrzahl von spärlichen Koeffizienten umfasst:

Aktualisieren des ersten Faltungswörterbuchs basierend auf dem Satz von Bildern mit niedriger Auflösung der Zielmodalität;
Aktualisieren des zweiten Faltungswörterbuchs basierend auf dem Satz von Bildern mit hoher Auflösung der Führungsmodalität;
Aktualisieren des ersten Kopplungsfaltungswörterbuchs basierend auf dem Satz von Bildern mit hoher Auflösung der Zielmodalität, dem ersten Satz von spärlichen Koeffizienten, dem zweiten Satz von spärlichen Koeffizienten und dem zweiten Kopplungsfaltungswörterbuch durch Umwandeln in ein Standard-Faltungswörterbuch-Lernproblem (Convolutional Dictionary Learning, CDL-Problem); und
Aktualisieren des zweiten Kopplungsfaltungswörterbuchs basierend auf dem Satz von Bildern mit hoher Auflösung der Zielmodalität, dem ersten Satz von spärlichen Koeffizienten, dem zweiten Satz von spärlichen Koeffizienten und dem ersten Kopplungsfaltungswörterbuch durch Umwandeln in ein Standard-CDL-Problem.

**9.** System nach Anspruch 8, wobei das Umwandeln des ersten Kopplungsfaltungswörterbuchs in ein Standard-CDL-Problem das Minimieren von $\frac{1}{2}\|X' - WA\|_2^2$ umfasst, wobei $X' = Z - VB$, und wobei das Umwandeln des zweiten Kopplungsfaltungswörterbuchs in ein Standard-CDL-Problem das Minimieren von $\frac{1}{2}\|Y' - VB\|_2^2$ umfasst, wobei $Y' = Z - WA$.

**10.** System nach Anspruch 6, umfassend das Durchführen einer multimodalen Bildsuperauflösung an einem neuen Bild mit niedriger Auflösung der Zielmodalität durch:

Erhalten des neuen Bildes mit niedriger Auflösung $X^{Test}$ der Zielmodalität und eines Bildes mit hoher Auflösung $Y^{Test}$ der Führungsmodalität;
Berechnen eines ersten Satzes von Testkoeffizienten $A^{Test}$ basierend auf dem trainierten ersten Faltungswörterbuch S und dem Bild mit niedriger Auflösung der Zielmodalität $X^{Test}$ unter Verwendung einer Standard-Faltungsspärlich-Codierungsaktualisierung;

Berechnen eines zweiten Satzes von Testkoeffizienten $B^{Test}$ basierend auf dem trainierten zweiten Faltungswörterbuch G und dem Bild mit hoher Auflösung der Führungsmodalität $Y^{Test}$ unter Verwendung der Standard-Faltungsspärlich-Codierungsaktualisierung; und

Erzeugen eines Bildes mit hoher Auflösung $Z^{Test}$ der Zielmodalität unter Verwendung des trainierten ersten Kopplungsfaltungswörterbuchs, des trainierten zweiten Kopplungsfaltungswörterbuchs, des ersten Satzes von Testkoeffizienten und des zweiten Satzes von Testkoeffizienten als $Z^{Test} = WA^{Test} + VB^{Test}$.

11. Ein oder mehrere nichtflüchtige maschinenlesbare Informationsspeichermedien, die eine oder mehrere Anweisungen umfassen, die bei Ausführung durch einen oder mehrere Hardwareprozessoren bewirken:

Erhalten einer Mehrzahl von Trainingsbildern, die ferner einen Satz von Bildern mit niedriger Auflösung 'X' einer Zielmodalität, einen Satz von Bildern mit hoher Auflösung 'Y' einer Führungsmodalität und einen Satz von Bildern mit hoher Auflösung 'Z' der Zielmodalität umfassen;

Initialisieren einer Mehrzahl von Wörterbüchern und einer zugeordneten Mehrzahl von spärlichen Koeffizienten, wobei die Mehrzahl von Wörterbüchern i) ein erstes Faltungswörterbuch 'S', das einem ersten Satz von spärlichen Koeffizienten 'A' unter der Mehrzahl von spärlichen Koeffizienten zugeordnet ist, der zu lernen ist, um Merkmale des Satzes von Bildern mit niedriger Auflösung 'X' der Zielmodalität zu erfassen, ii) ein zweites Faltungswörterbuch 'G', das einem zweiten Satz von spärlichen Koeffizienten 'B' unter der Mehrzahl von spärlichen Koeffizienten zugeordnet ist, der zu lernen ist, um Merkmale des Satzes von Bildern mit hoher Auflösung 'Y' der Führungsmodalität zu erfassen, iii) ein erstes Kopplungsfaltungswörterbuch 'W' und iv) ein zweites Kopplungsfaltungswörterbuch 'V' umfasst, wobei das erste und das zweite Kopplungsfaltungswörterbuch 'W', 'V' verwendet werden, um die Beziehung zwischen dem Ziel und den Führungsmodalitäten durch Modellieren der Beziehung zwischen dem ersten Satz von spärlichen Koeffizienten 'A' und dem zweiten Satz von spärlichen Koeffizienten 'B' beim Rekonstruieren des Satzes von Bildern mit hoher Auflösung 'Z' der Zielmodalität zu modellieren; und

gemeinsames Trainieren der initialisierten Mehrzahl von Wörterbüchern und der zugeordneten Mehrzahl von spärlichen Koeffizienten unter Verwendung der Mehrzahl von Trainingsbildern durch iteratives Durchführen einer Mehrzahl von Schritten, bis Konvergenz einer Zielfunktion erreicht ist, wobei die trainierte Mehrzahl von Wörterbüchern und die zugeordnete Mehrzahl von spärlichen Koeffizienten, die beim Erreichen der Konvergenz der Zielfunktion erhalten werden, zum Durchführen einer multimodalen Bildsuperauflösung verwendet werden, und wobei die Mehrzahl von Schritten umfasst:

Trainieren Mehrzahl von spärlichen Koeffizienten durch Festhalten der Mehrzahl von Wörterbüchern; und
Trainieren der Mehrzahl von Wörterbüchern durch Festhalten der Mehrzahl von spärlichen Koeffizienten.

12. Ein oder mehrere nichtflüchtige maschinenlesbare Informationsspeichermedien nach Anspruch 11, wobei die Zielfunktion dargestellt wird als:

$$\min_{S,G,A,B,W,V} \frac{1}{2}\|X - SA\|_F^2 + \frac{1}{2}\|Y - GB\|_F^2 + \frac{\mu}{2}\|Z - WA - VB\|_F^2 + \lambda_a\|A\|_1 + \lambda_b\|B\|_1 \quad.$$

13. Ein oder mehrere nichtflüchtige maschinenlesbare Informationsspeichermedien nach Anspruch 11, wobei das Trainieren der Mehrzahl von spärlichen Koeffizienten durch Festhalten der Mehrzahl von Wörterbüchern umfasst:

Aktualisieren des ersten Satzes von spärlichen Koeffizienten basierend auf dem Satz von Bildern mit niedriger Auflösung der Zielmodalität, dem Satz von Bildern mit hoher Auflösung der Zielmodalität, dem ersten Faltungswörterbuch, dem ersten Kopplungsfaltungswörterbuch, dem zweiten Kopplungsfaltungswörterbuch und dem zweiten Satz von spärlichen Koeffizienten durch Lösen von

$$\min_A \frac{1}{2}\|X - SA\|_F^2 + \frac{\mu}{2}\|X' - WA\|_F^2 + \lambda_a\|A\|_1 \text{, wobei } X' = Z - VB; \text{ und}$$

Aktualisieren des zweiten Satzes von spärlichen Koeffizienten basierend auf dem Satz von Bildern mit hoher Auflösung der Führungsmodalität, dem Satz von Bildern mit hoher Auflösung der Zielmodalität, dem zweiten Faltungswörterbuch, dem ersten Kopplungsfaltungswörterbuch, dem zweiten Kopplungsfaltungswörterbuch und dem ersten Satz von spärlichen Koeffizienten durch Lösen von

$$\min_B \frac{1}{2}\|Y - GB\|_F^2 + \frac{\mu}{2}\|Y' - VB\|_F^2 + \lambda_b\|B\|_1 \text{, wobei } Y' = Z - WA,$$

und wobei das Trainieren der Mehrzahl von Wörterbüchern durch Festhalten der Mehrzahl von spärlichen Koeffizienten umfasst:

Aktualisieren des ersten Faltungswörterbuchs basierend auf dem Satz von Bildern mit niedriger Auflösung der Zielmodalität;

Aktualisieren des zweiten Faltungswörterbuchs basierend auf dem Satz von Bildern mit hoher Auflösung der Führungsmodalität;

Aktualisieren des ersten Kopplungsfaltungswörterbuchs basierend auf dem Satz von Bildern mit hoher Auflösung der Zielmodalität, dem ersten Satz von spärlichen Koeffizienten, dem zweiten Satz von spärlichen Koeffizienten und dem zweiten Kopplungsfaltungswörterbuch durch Umwandeln in ein Standard-Faltungswörterbuch-Lernproblem (Convolutional Dictionary Learning, CDL-Problem); und

Aktualisieren des zweiten Kopplungsfaltungswörterbuchs basierend auf dem Satz von Bildern mit hoher Auflösung der Zielmodalität, dem ersten Satz von spärlichen Koeffizienten, dem zweiten Satz von spärlichen Koeffizienten und dem ersten Kopplungsfaltungswörterbuch durch Umwandeln in ein Standard-CDL-Problem.

14. Ein oder mehrere nichtflüchtige maschinenlesbare Informationsspeichermedien nach Anspruch 13, wobei das Umwandeln des ersten Kopplungsfaltungswörterbuchs in ein Standard-CDL-Problem das Minimieren von $\frac{1}{2}\|X' - WA\|_2^2$ umfasst, wobei $X' = Z - VB$, und wobei das Umwandeln des zweiten Kopplungsfaltungswörterbuchs in ein Standard-CDL-Problem das Minimieren von $\frac{1}{2}\|Y' - VB\|_2^2$ umfasst, wobei $Y' = Z - WA$.

15. Ein oder mehrere nichtflüchtige maschinenlesbare Informationsspeichermedien nach Anspruch 11, wobei die eine oder die mehreren Anweisungen, die bei Ausführung durch den einen oder die mehreren Hardwareprozessoren ferner das Durchführen einer multimodalen Bildsuperauflösung an einem neuen Bild mit niedriger Auflösung der Zielmodalität bewirken durch:

Erhalten des neuen Bildes mit niedriger Auflösung $X^{Test}$ der Zielmodalität und eines Bildes mit hoher Auflösung $Y^{Test}$ der Führungsmodalität;

Berechnen eines ersten Satzes von Testkoeffizienten $A^{Test}$ basierend auf dem trainierten ersten Faltungswörterbuch S und dem Bild mit niedriger Auflösung der Zielmodalität $X^{Test}$ unter Verwendung einer Standard-Faltungsspärlich-Codierungsaktualisierung;

Berechnen eines zweiten Satzes von Testkoeffizienten $B^{Test}$ basierend auf dem trainierten zweiten Faltungswörterbuch G und dem Bild mit hoher Auflösung der Führungsmodalität $Y^{Test}$ unter Verwendung der Standard-Faltungsspärlich-Codierungsaktualisierung; und

Erzeugen eines Bildes mit hoher Auflösung $Z^{Test}$ der Zielmodalität unter Verwendung des trainierten ersten Kopplungsfaltungswörterbuchs, des trainierten zweiten Kopplungsfaltungswörterbuchs, des ersten Satzes von Testkoeffizienten und des zweiten Satzes von Testkoeffizienten als $Z^{Test} = WA^{Test} + VB^{Test}$.

## Revendications

1. Procédé mis en œuvre par processeur (200), comprenant :

l'obtention (202), par l'intermédiaire d'un ou plusieurs processeurs matériels, d'une pluralité d'images d'apprentissage comprenant un ensemble d'images à basse résolution 'X' d'une modalité cible, un ensemble d'images à haute résolution 'Y' d'une modalité de guidage, et un ensemble d'images à haute résolution 'Z' de la modalité cible ;

l'initialisation (204), par l'intermédiaire des un ou plusieurs processeurs matériels, d'une pluralité de dictionnaires et d'une pluralité associée de coefficients épars, dans lequel la pluralité de dictionnaires comprend i) un premier dictionnaire convolutif 'S' associé à un premier ensemble de coefficients épars 'A' parmi la pluralité de coefficients épars qui doit être appris pour capturer des caractéristiques de l'ensemble d'images à basse résolution 'X' de la modalité cible, ii) un second dictionnaire convolutif 'G' associé à un second ensemble de coefficients épars 'B' parmi la pluralité de coefficients épars qui doit être appris pour capturer des caractéristiques de l'ensemble d'images à haute résolution 'Y' de la modalité de guidage, iii) un premier dictionnaire convolutif de couplage 'W', et iv) un second dictionnaire convolutif de couplage 'V', dans lequel les premier et second dictionnaires convolutifs de couplage 'W', 'V' sont utilisés pour modéliser la relation entre la cible et les modalités de guidage en modélisant la relation entre le premier ensemble de coefficients épars '*A*' et le second ensemble de coefficients épars '*B*' dans la reconstruction de l'ensemble d'images à haute résolution '*Z*' de la modalité cible ; et

l'apprentissage conjoint (206), par l'intermédiaire des un ou plusieurs processeurs matériels, de la pluralité initialisée de dictionnaires et de la pluralité associée de coefficients épars en utilisant la pluralité d'images d'apprentissage en effectuant une pluralité d'étapes de manière itérative jusqu'à ce qu'une convergence d'une fonction objective soit obtenue, dans lequel la pluralité entraînée de dictionnaires et la pluralité associée de coefficients épars obtenus lors de l'obtention de la convergence de la fonction objective sont utilisés pour effectuer une super-résolution d'image multimodale, et dans lequel la pluralité d'étapes comprend :

l'apprentissage (206A) de la pluralité de coefficients épars en maintenant la pluralité de dictionnaires fixes ; et
l'apprentissage (206B) de la pluralité de dictionnaires en maintenant la pluralité de coefficients épars fixes.

2. Procédé selon la revendication 1, dans lequel la fonction objective est représentée par :

$$\min_{S,G,A,B,W,V} \frac{1}{2}\|X - SA\|_F^2 + \frac{1}{2}\|Y - GB\|_F^2 + \frac{\mu}{2}\|Z - WA - VB\|_F^2 + \lambda_a\|A\|_1 + \lambda_b\|B\|_1.$$

3. Procédé selon la revendication 1, dans lequel l'apprentissage de la pluralité de coefficients épars en maintenant la pluralité de dictionnaires fixes comprend :

la mise à jour du premier ensemble de coefficients épars sur la base de l'ensemble d'images à basse résolution de la modalité cible, de l'ensemble d'images à haute résolution de la modalité cible, du premier dictionnaire convolutif, du premier dictionnaire convolutif de couplage, du second dictionnaire convolutif de couplage, et du second ensemble de coefficients épars en résolvant

$$\min_A \frac{1}{2}\|X - SA\|_F^2 + \frac{\mu}{2}\|X' - WA\|_F^2 + \lambda_a\|A\|_1$$, dans lequel *X' = Z - VB* ; et

la mise à jour du second ensemble de coefficients épars sur la base de l'ensemble d'images à haute résolution de modalité de guidage, de l'ensemble d'images à haute résolution de la modalité cible, du second dictionnaire convolutif, du premier dictionnaire convolutif de couplage, du second dictionnaire convolutif de couplage, et du premier ensemble de coefficients épars en résolvant $$\min_B \frac{1}{2}\|Y - GB\|_F^2 + \frac{\mu}{2}\|Y' - VB\|_F^2 + \lambda_b\|B\|_1,$$

dans lequel *Y' = Z - WA;*
et dans lequel l'apprentissage de la pluralité de dictionnaires en maintenant la pluralité de coefficients épars fixes comprend :

la mise à jour du premier dictionnaire convolutif sur la base de l'ensemble d'images à basse résolution de la modalité cible ;
la mise à jour du second dictionnaire convolutif sur la base de l'ensemble d'images à haute résolution de la modalité de guidage ;
la mise à jour du premier dictionnaire convolutif de couplage sur la base de l'ensemble d'images à haute résolution de la modalité cible, du premier ensemble de coefficients épars, du second ensemble de coefficients épars et du second dictionnaire convolutif de couplage par conversion en un problème d'apprentissage de dictionnaire convolutif (CDL) standard ; et
la mise à jour du second dictionnaire convolutif de couplage sur la base de l'ensemble d'images à haute résolution de la modalité cible, du premier ensemble de coefficients épars, du second ensemble de coefficients épars et du premier dictionnaire convolutif de couplage par conversion en un problème CDL standard.

4. Procédé selon la revendication 3, dans lequel la conversion du premier dictionnaire convolutif de couplage en un problème CDL standard comprend la minimisation de $\frac{1}{2}\|X' - WA\|_2^2$, dans lequel *X' = Z - VB*, et dans lequel la conversion du second dictionnaire convolutif de couplage en un problème CDL standard comprend la minimisation de

$\frac{1}{2}\|Y' - VB\|_2^2$, dans lequel *Y' = Z - WA*.

5. Procédé selon la revendication 1, comprenant l'exécution d'une super-résolution d'image multimodale sur une nouvelle image à basse résolution de la modalité cible par :

l'obtention de la nouvelle image à basse résolution $X^{test}$ de la modalité cible et d'une image à haute résolution $Y^{test}$ de la modalité de guidage ;

le calcul d'un premier ensemble de coefficients de test $A^{test}$ sur la base du premier dictionnaire convolutif formé $S$ et de l'image à basse résolution de la modalité cible $X^{test}$ en utilisant une mise à jour de codage épars convolutif standard ;

le calcul d'un second ensemble de coefficients de test $B^{test}$ sur la base du second dictionnaire convolutif formé G et de l'image à haute résolution de la modalité de guidage $Y^{test}$ en utilisant la mise à jour de codage épars convolutif standard ; et

la génération d'une image à haute résolution $Z^{test}$ de la modalité cible en utilisant le premier dictionnaire convolutif de couplage formé, le second dictionnaire convolutif de couplage formé, le premier ensemble de coefficients de test, et le second ensemble de coefficients de test comme $Z^{test} = W A^{test} + V B^{test}$.

6. Système (100), comprenant :

une mémoire (102) stockant des instructions ;
une ou plusieurs interfaces de communication (106) ; et
un ou plusieurs processeurs matériels (104) couplés à la mémoire (102) via les une ou plusieurs interfaces de communication (106), dans lequel les un ou plusieurs processeurs matériels (104) sont configurés par les instructions pour :

obtenir une pluralité d'images d'apprentissage comprenant un ensemble d'images à basse résolution *'X'* d'une modalité cible, un ensemble d'images à haute résolution 'Y' d'une modalité de guidage, et un ensemble d'images à haute résolution *'Z'* de la modalité cible ;

initialiser une pluralité de dictionnaires et une pluralité associée de coefficients épars, dans lequel la pluralité de dictionnaires comprend i) un premier dictionnaire convolutif *'S'* associé à un premier ensemble de coefficients épars *'A'* parmi la pluralité de coefficients épars qui doit être appris pour capturer des caractéristiques de l'ensemble d'images à basse résolution *'X'* de la modalité cible, ii) un second dictionnaire convolutif *'G'* associé à un second ensemble de coefficients épars *'B'* parmi la pluralité de coefficients épars qui doit être appris pour capturer des caractéristiques de l'ensemble d'images à haute résolution *'Y'* de la modalité de guidage, iii) un premier dictionnaire convolutif de couplage *'W',* et iv) un second dictionnaire convolutif de couplage *'V'*, dans lequel les premier et second dictionnaires convolutifs de couplage *'W', 'V'* sont utilisés pour modéliser la relation entre la cible et les modalités de guidage en modélisant la relation entre le premier ensemble de coefficients épars *'A'* et le second ensemble de coefficients épars *'B'* dans la reconstruction de l'ensemble d'images à haute résolution *'Z'* de la modalité cible ; et

entraîner conjointement la pluralité initialisée de dictionnaires et la pluralité associée de coefficients épars en utilisant la pluralité d'images d'apprentissage en effectuant une pluralité d'étapes de manière itérative jusqu'à ce qu'une convergence d'une fonction objective soit obtenue, dans lequel la pluralité entraînée de dictionnaires et la pluralité associée de coefficients épars obtenus lors de l'obtention de la convergence de la fonction objective sont utilisés pour effectuer une super-résolution d'image multimodale, et dans lequel la pluralité d'étapes comprend :

l'apprentissage de la pluralité de coefficients épars en maintenant la pluralité de dictionnaires fixes ; et
l'apprentissage de la pluralité de dictionnaires en maintenant la pluralité de coefficients épars fixes.

7. Système selon la revendication 6, dans lequel la fonction objective est représentée par :

$$\min_{S,G,A,B,W,V} \frac{1}{2}\|X - SA\|_F^2 + \frac{1}{2}\|Y - GB\|_F^2 + \frac{\mu}{2}\|Z - WA - VB\|_F^2 + \lambda_a\|A\|_1 + \lambda_b\|B\|_1.$$

8. Système selon la revendication 6, dans lequel l'apprentissage de la pluralité de coefficients épars en maintenant la pluralité de dictionnaires fixes comprend :

la mise à jour du premier ensemble de coefficients épars sur la base de l'ensemble d'images à basse résolution de la modalité cible, de l'ensemble d'images à haute résolution de la modalité cible, du premier dictionnaire convolutif, du premier dictionnaire convolutif de couplage, du second dictionnaire convolutif de couplage, et du second ensemble de coefficients épars en résolvant

$$\min_{A} \frac{1}{2} \|X - SA\|_F^2 + \frac{\mu}{2} \|X' - WA\|_F^2 + \lambda_a \|A\|_1$$ , dans lequel $X' = Z - VB$ ; et

la mise à jour du second ensemble de coefficients épars sur la base de l'ensemble d'images à haute résolution de modalité de guidage, de l'ensemble d'images à haute résolution de la modalité cible, du second dictionnaire convolutif, du premier dictionnaire convolutif de couplage, du second dictionnaire convolutif de couplage, et du premier ensemble de coefficients épars en résolvant $$\min_{B} \frac{1}{2} \|Y - GB\|_F^2 + \frac{\mu}{2} \|Y' - VB\|_F^2 + \lambda_b \|B\|_1$$ ,

dans lequel $Y' = Z - WA$,
et dans lequel l'apprentissage de la pluralité de dictionnaires en maintenant la pluralité de coefficients épars fixes comprend :

la mise à jour du premier dictionnaire convolutif sur la base de l'ensemble d'images à basse résolution de la modalité cible ;
la mise à jour du second dictionnaire convolutif sur la base de l'ensemble d'images à haute résolution de la modalité de guidage ;
la mise à jour du premier dictionnaire convolutif de couplage sur la base de l'ensemble d'images à haute résolution de la modalité cible, du premier ensemble de coefficients épars, du second ensemble de coefficients épars et du second dictionnaire convolutif de couplage par conversion en un problème d'apprentissage de dictionnaire convolutif (CDL) standard ; et
la mise à jour du second dictionnaire convolutif de couplage sur la base de l'ensemble d'images à haute résolution de la modalité cible, du premier ensemble de coefficients épars, du second ensemble de coefficients épars et du premier dictionnaire convolutif de couplage par conversion en un problème CDL standard.

9.  Système selon la revendication 8, dans lequel la conversion du premier dictionnaire convolutif de couplage en un problème CDL standard comprend la minimisation de $\frac{1}{2} \|X' - WA\|_2^2$ , dans lequel $X' = Z - VB$, et dans lequel la conversion du second dictionnaire convolutif de couplage en un problème CDL standard comprend la minimisation de

$\frac{1}{2} \|Y' - VB\|_2^2$ , dans lequel $Y' = Z - WA$.

10. Système selon la revendication 6, comprenant l'exécution d'une super-résolution d'image multimodale sur une nouvelle image à basse résolution de la modalité cible par :

l'obtention de la nouvelle image à basse résolution $X^{test}$ de la modalité cible et d'une image à haute résolution $Y^{test}$ de la modalité de guidage ;
le calcul d'un premier ensemble de coefficients de test $A^{test}$ sur la base du premier dictionnaire convolutif formé $S$ et de l'image à basse résolution de la modalité cible $X^{test}$ en utilisant une mise à jour de codage épars convolutif standard ;
le calcul d'un second ensemble de coefficients de test $B^{test}$ sur la base du second dictionnaire convolutif formé G et de l'image à haute résolution de la modalité de guidage $Y^{test}$ en utilisant la mise à jour de codage épars convolutif standard ; et
la génération d'une image à haute résolution $Z^{test}$ de la modalité cible en utilisant le premier dictionnaire convolutif de couplage formé, le second dictionnaire convolutif de couplage formé, le premier ensemble de coefficients de test, et le second ensemble de coefficients de test comme $Z^{test} = W\,A^{test} + V\,B^{test}$.

11. Un ou plusieurs supports de stockage d'informations lisibles par machine non transitoires comprenant une ou plusieurs instructions qui, lorsqu'elles sont exécutées par un ou plusieurs processeurs matériels, amènent :

l'obtention d'une pluralité d'images d'apprentissage comprenant en outre un ensemble d'images à basse résolution 'X' d'une modalité cible, un ensemble d'images à haute résolution 'Y' d'une modalité de guidage, et un ensemble d'images à haute résolution 'Z' de la modalité cible ;
l'initialisation d'une pluralité de dictionnaires et d'une pluralité associée de coefficients épars, dans lequel la pluralité de dictionnaires comprend i) un premier dictionnaire convolutif 'S' associé à un premier ensemble de coefficients épars 'A' parmi la pluralité de coefficients épars qui doit être appris pour capturer des caractéristiques de l'ensemble d'images à basse résolution 'X' de la modalité cible, ii) un second dictionnaire convolutif 'G' associé à un second ensemble de coefficients épars *'B'* parmi la pluralité de coefficients épars qui doit être appris pour capturer des caractéristiques de l'ensemble d'images à haute résolution *'Y'* de la modalité de guidage, iii) un premier dictionnaire convolutif de couplage *'W',* et iv) un second dictionnaire convolutif de couplage *'V',* dans lequel les premier et second dictionnaires convolutifs de couplage *'W', 'V'* sont utilisés pour modéliser la relation entre la cible et les modalités de guidage en modélisant la relation entre le premier ensemble de coefficients épars *'A'* et le second ensemble de coefficients épars *'B'* dans la reconstruction de l'ensemble d'images à haute résolution *'Z'* de la modalité cible ; et

l'entraînement conjoint de la pluralité initialisée de dictionnaires et de la pluralité associée de coefficients épars en utilisant la pluralité d'images d'apprentissage en effectuant une pluralité d'étapes de manière itérative jusqu'à ce qu'une convergence d'une fonction objective soit obtenue, dans lequel la pluralité entraînée de dictionnaires et la pluralité associée de coefficients épars obtenus lors de l'obtention de la convergence de la fonction objective sont utilisés pour effectuer une super-résolution d'image multimodale, et dans lequel la pluralité d'étapes comprend :

l'entraînement de la pluralité de coefficients épars en maintenant la pluralité de dictionnaires fixes ; et
l'entraînement de la pluralité de dictionnaires en maintenant la pluralité de coefficients épars fixes.

**12.** Un ou plusieurs supports de stockage d'informations lisibles par machine non transitoires selon la revendication 11, dans lequel la fonction objective est représentée par :

$$\min_{S,G,A,B,W,V} \frac{1}{2}\|X - SA\|_F^2 + \frac{1}{2}\|Y - GB\|_F^2 + \frac{\mu}{2}\|Z - WA - VB\|_F^2 + \lambda_a\|A\|_1 + \lambda_b\|B\|_1 \ .$$

**13.** Un ou plusieurs supports de stockage d'informations lisibles par machine non transitoires selon la revendication 11, dans lequel l'entraînement de la pluralité de coefficients épars en maintenant la pluralité de dictionnaires fixes comprend :

la mise à jour du premier ensemble de coefficients épars sur la base de l'ensemble d'images à basse résolution de la modalité cible, de l'ensemble d'images à haute résolution de la modalité cible, du premier dictionnaire convolutif, du premier dictionnaire convolutif de couplage, du second dictionnaire convolutif de couplage, et du second ensemble de coefficients épars en résolvant

$$\min_A \frac{1}{2}\|X - SA\|_F^2 + \frac{\mu}{2}\|X' - WA\|_F^2 + \lambda_a\|A\|_1$$ , dans lequel *X' = Z - VB* ; et

la mise à jour du second ensemble de coefficients épars sur la base de l'ensemble d'images à haute résolution de modalité de guidage, de l'ensemble d'images à haute résolution de la modalité cible, du second dictionnaire convolutif, du premier dictionnaire convolutif de couplage, du second dictionnaire convolutif de couplage, et du premier ensemble de coefficients épars en résolvant $$\min_B \frac{1}{2}\|Y - GB\|_F^2 + \frac{\mu}{2}\|Y' - VB\|_F^2 + \lambda_b\|B\|_1$$ , dans lequel *Y' = Z - WA,*

et dans lequel l'apprentissage de la pluralité de dictionnaires en maintenant la pluralité de coefficients épars fixes comprend :

la mise à jour du premier dictionnaire convolutif sur la base de l'ensemble d'images à basse résolution de la modalité cible ;
la mise à jour du second dictionnaire convolutif sur la base de l'ensemble d'images à haute résolution de la modalité de guidage ;
la mise à jour du premier dictionnaire convolutif de couplage sur la base de l'ensemble d'images à haute résolution de la modalité cible, du premier ensemble de coefficients épars, du second ensemble de coefficients épars et du second dictionnaire convolutif de couplage par conversion en un problème d'apprentissage de dictionnaire convolutif (CDL) standard ; et
la mise à jour du second dictionnaire convolutif de couplage sur la base de l'ensemble d'images à haute résolution de la modalité cible, du premier ensemble de coefficients épars, du second ensemble de coefficients épars et du premier dictionnaire convolutif de couplage par conversion en un problème CDL standard.

**14.** Un ou plusieurs supports de stockage d'informations lisibles par machine non transitoires selon la revendication 13, dans lequel la conversion du premier dictionnaire convolutif de couplage en un problème CDL standard comprend la minimisation de $\frac{1}{2}\|X' - WA\|_2^2$, dans lequel *X'* = *Z* - *VB,* et dans lequel la conversion du second dictionnaire convolutif de couplage en un problème CDL standard comprend la minimisation de $\frac{1}{2}\|Y' - VB\|_2^2$, dans lequel *Y'* = *Z* - *WA.*

15. Un ou plusieurs supports de stockage d'informations lisibles par machine non transitoires selon la revendication 11, dans lequel les une ou plusieurs instructions qui, lorsqu'elles sont exécutées par les un ou plusieurs processeurs matériels, amènent en outre l'exécution d'une super-résolution d'image multimodale sur une nouvelle image à basse résolution de la modalité cible par :

l'obtention de la nouvelle image à basse résolution $X^{test}$ de la modalité cible et d'une image à haute résolution $Y^{test}$ de la modalité de guidage ;

le calcul d'un premier ensemble de coefficients de test $A^{test}$ sur la base du premier dictionnaire convolutif formé S et de l'image à basse résolution de la modalité cible $X^{tes}$ en utilisant une mise à jour de codage épars convolutif standard ;

le calcul d'un second ensemble de coefficients de test $B^{test}$ sur la base du second dictionnaire convolutif formé G et de l'image à haute résolution de la modalité de guidage $Y^{test}$ en utilisant la mise à jour de codage épars convolutif standard ; et

la génération d'une image à haute résolution $Z^{test}$ de la modalité cible en utilisant le premier dictionnaire convolutif de couplage formé, le second dictionnaire convolutif de couplage formé, le premier ensemble de coefficients de test, et le second ensemble de coefficients de test comme $Z^{test} = W\,A^{test} + V\,B^{test}$.

SYSTEM
100

MEMORY
102

DATABASE
108

HARDWARE
PROCESSOR(S)
104

I/O INTERFACE(S)
106

FIG. 1

200

Obtaining a plurality of training images comprising a plurality of low-resolution images 'X' of a target modality, a plurality of high-resolution images 'Y' of a guidance modality, and a plurality of high-resolution images 'Z' of the target modality — 202

Initializing a plurality of dictionaries and associated plurality of sparse coefficients, wherein the plurality of dictionaries comprise i) a first convolutional dictionary 'S' associated with a first set of sparse coefficients 'A', ii) a second convolutional dictionary 'G' associated with a second set of sparse coefficients 'B', iii) a first coupling convolutional dictionary 'W', and iv) a second coupling convolutional dictionary 'V' — 204

Jointly training the initialized plurality of dictionaries and the associated plurality of sparse coefficients using the plurality of training images by performing a plurality of steps iteratively until convergence of an objective function is achieved, wherein the trained plurality of dictionaries and the associated plurality of sparse coefficients obtained upon achieving the convergence of the objective function are used for performing a multimodal image super resolution, wherein the plurality of steps comprise: — 206

Training the plurality of sparse coefficients by keeping the plurality of dictionaries fixed — 206A

Training the plurality of dictionaries by keeping the plurality of sparse coefficients fixed — 206B

FIG. 2

LR image – target modality

HR image – guidance modality

HR image – target modality

FIG. 3

FIG. 4

First convolutional dictionary

M = 4

M = 8

M = 12

FIG. 5A

Second convolutional dictionary

M = 4

M = 8

M = 12

FIG. 5B

First coupling convolutional dictionary

M = 4

M = 8

M = 12

FIG. 5C

Second coupling convolutional dictionary

M = 4

M = 8

M = 12

FIG. 5D

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321089711

**Non-patent literature cited in the description**

- **FANGYUAN GAO**. Multi-modal convolutional dictionary learning. *IEEE Transactions on Image Processing*, 2022, vol. 31, 1325-1339
- Statistics of real-world hyperspectral images,. **AYAN CHAKRABARTI** ; **TODD ZICKLER**. in CVPR 2011. IEEE, 2011, 193-200
- Multi-spectral sift for scene category recognition. **MATTHEW BROWN** ; **SABINE SUSSTRUNK**. in CVPR 2011. IEEE, 2011, 177-184
- **KAIMING HE** ; **JIAN SUN** ; **XIAOOU TANG**. Guided image filtering. *IEEE transactions on pattern analysis and machine intelligence*, June 2013, vol. 35, 1397-1409
- **JOHANNES KOPF** ; **MICHAEL F COHEN** ; **DANI LISCHINSKI** ; **MATT UYTTENDAELE**. Joint bilateral upsampling,. *ACM Transactions on Graphics (ToG)*, 2007, vol. 26 (3), 96
- **XIAOYONG SHEN** ; **QIONG YAN** ; **LI XU** ; **LIZHUANG MA,** ; **JIAYA JIA**. Multispectral joint image restoration via optimizing a scale map. *IEEE transactions on pattern analysis and machine intelligence*, 2015, vol. 37 (12), 2518-2530
- Deep joint image filtering,. **YIJUN LI** ; **JIA-BIN HUANG** ; **NARENDRA AHUJA** ; **MING-HSUAN YANG**. in European Conference on Computer Vision. Springer, 2016, 154-169
- **PINGFAN SONG** ; **XIN DENG** ; **JOAO FC MOTA** ; **NIKOS DELIGIANNIS** ; **PIER LUIGI DRAGOTTI** ; **MIGUEL RD RODRIGUES**. Multimodal image super-resolution via joint sparse representations induced by coupled dictionaries,. *IEEE Transactions on Computational Imaging*, 2019, vol. 6, 57-72
- Joint coupled transform learning framework for multimodal image super-resolution. **ANDREW GIGIE** ; **A ANIL KUMAR** ; **ANGSHUL MAJUMDAR** ; **KRITI KUMAR** ; **M GIRISH CHANDRA,**. in ICASSP 2021-2021 IEEE International Conference on Acoustics, Speech and Signal Processing (ICASSP). IEEE, 2021, 1640-1644
- **R KRISHNA KANTH** ; **ANDREW GIGIE** ; **KRITI KUMAR** ; **A ANIL KUMAR** ; **ANGSHUL MAJUMDAR,** ; **BALAMURALIDHAR P**. Multi-modal image super-resolution with joint coupled deep transform learning. *in 2022 30th European Signal Processing Conference (EUSIPCO)*, 2022, 474-478
- **FANGYUAN GAO** ; **XIN DENG** ; **MAI XU** ; **JINGYI XU** ; **PIER LUIGI DRAGOTTI**. Multi-modal convolutional dictionary learning. *IEEE Transactions on Image Processing*, 2022, vol. 31, 1325-1339